# EUROPEAN PATENT APPLICATION

(11) **EP 4 712 497 A1**
(43) Date of publication of application: **18.03.2026**
(21) Application number: 24832260.4
(22) Date of filing: 21.05.2024
(51) Int. Cl.: H04N 23/55, H04N 23/54, H04N 23/57, G03B 17/17, G03B 17/12, G03B 30/00, G02B 7/18, G02B 5/04, G02B 5/08, G02B 7/02

(54) **CAMERA MODULE AND ELECTRONIC DEVICE INCLUDING SAME**

(30) Priority: 29.06.2023 KR 20230083940; 07.09.2023 KR 20230119145
(71) Applicant: Samsung Electronics Co., Ltd., Suwon-si, Gyeonggi-do 16677 (KR)
(72) Inventor: WON, Jonghoon, Suwon-si Gyeonggi-do 16677 (KR); YANG, Somi, Suwon-si Gyeonggi-do 16674 (KR)
(74) Representative: HGF
(86) International application number: PCT/KR2024/006862
(87) International publication number: WO 2025/005476

(57) **Abstract**

According to an embodiment disclosed herein, a camera module and/or an electronic device including the camera module may comprise: a first reflective member including an accommodation groove, which is formed on one surface, and a first optical surface, which is provided in a region provided by the accommodation groove; a second reflective member including a protrusion, which protrudes from one surface and is at least partially accommodated in the accommodation groove, and a second optical surface, which is provided on one surface of the protrusion and faces the first optical surface; and an image sensor configured to detect at least a portion of light guided via the first optical surface and the second optical surface. In an embodiment, the accommodation groove may be configured such that, in a plane parallel to the first optical surface or the second optical surface, the protrusion is allowed to move in a first extension direction and prevented from moving in a second extension direction intersecting the first extension direction. Other embodiments are possible.

## Description

### [Technical Field]

An embodiment of the disclosure relates to an electronic device, for example, a camera module and/or an electronic device including the same.

### [Background Art]

An electronic device may refer to a device that performs a specified function according to an installed program, such as a home appliance, an electronic organizer, a portable multimedia player, a mobile communication terminal, a tablet PC, a video/audio device, a desktop/laptop computer, and/or a vehicle navigation system. For example, these electronic devices may output stored information as audio or video. As the integration level of electronic devices increases and ultra-high-speed, large-capacity wireless communication becomes widespread, various functions may now be integrated into a single electronic device, such as a mobile communication terminal. For example, a communication function, an entertainment function like games, a multimedia function like music/video playback, a communication and security function for mobile banking, and/or a schedule management or electronic wallet function are integrated into one electronic device.

As digital camera manufacturing technology has advanced, electronic devices equipped with small, lightweight camera modules have become commercialized. With a camera module, for example, an imaging device, being integrated into a commonly carried electronic device (e.g., a mobile communication terminal), a user may now easily use various functions such as taking photos or videos, video calls, and/or augmented reality.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment of the disclosure, a camera module may include a first reflective member including a receiving groove formed on one surface thereof and a first optical surface provided within an area provided by the receiving groove, a second reflective member including a protrusion protruding from one surface thereof and at least partially accommodated in the receiving groove, and a second optical surface provided on one surface of the protrusion to be disposed to face the first optical surface, and an image sensor configured to detect at least a portion of light guided via the first optical surface and the second optical surface. In an embodiment, the receiving groove may be configured to allow the protrusion to move in a first extension direction in a plane parallel to the first optical surface or the second optical surface, and to inhibit a movement of the protrusion in a second extension direction crossing the first extension direction.

According to an embodiment of the disclosure, an electronic device may include at least one first camera module, a second camera module disposed adjacent to the at least one first camera module and having a smaller field of view (FOV) than the at least one first camera module, wherein the second camera module is described through embodiment(s) described later, and a processor configured to obtain an object image using at least one of the at least one first camera module or the second camera module.

### [Brief Description of Drawings]

The above or other aspects, configurations, and/or advantages of an embodiment of the disclosure may become more apparent from the following detailed description with reference to the accompanying drawings.
FIG. 1 is a block diagram illustrating an electronic device in a network environment according to an embodiment of the disclosure.
FIG. 2 is a front perspective view illustrating an electronic device according to an embodiment of the disclosure.
FIG. 3 is a rear perspective view illustrating the electronic device of FIG. 2 according to an embodiment of the disclosure.
FIG. 4 is a front exploded perspective view illustrating the electronic of FIG. 2 according to an embodiment of the disclosure.
FIG. 5 is a rear exploded perspective view illustrating the electronic device of FIG. 2 according to an embodiment of the disclosure.
FIG. 6 is a cross-sectional view illustrating a portion of the electronic device, taken along A-A' in FIG. 3, according to an embodiment of the disclosure.
FIG. 7 is a configuration diagram illustrating an optical path of a camera module in an electronic device according to an embodiment of the disclosure.
FIG. 8 is a diagram illustrating an optical member in a camera module according to an embodiment of the disclosure.
FIG. 9 is a perspective view illustrating a first reflective member in the optical member of FIG. 8 according to an embodiment of the disclosure.
FIG. 10 is a perspective view illustrating a second reflective member in the optical member of FIG. 8 according to an embodiment of the disclosure.
FIG. 11 is a perspective view illustrating a second reflective member in an optical member of a camera module according to an embodiment of the disclosure.
FIG. 12 is a diagram illustrating an optical member of a camera module according to an embodiment of the disclosure.
FIG. 13 is a diagram illustrating an optical member of a camera module according to an embodiment of the disclosure.
FIG. 14 is a first perspective view illustrating a camera module according to an embodiment of the disclosure.
FIG. 15 is a second perspective view illustrating a camera module according to an embodiment of the disclosure.
FIG. 16 is a diagram illustrating the arrangement of camera module(s) in an electronic device according to an embodiment of the disclosure.
FIG. 17 is a diagram illustrating an electronic device including a camera module according to an embodiment of the disclosure.

Throughout the accompanying drawings, similar reference numerals may be assigned to similar parts, configurations, and/or structures.

### [Mode for Carrying out the Invention]

As electronic devices become smaller and lighter, they become more convenient to carry and use. In an environment where displays are getting larger to allow users to enjoy bigger screens even on portable electronic devices, reducing thickness helps make electronic devices smaller and lighter. However, it may be challenging to mount an imaging device with good optical performance in a miniaturized electronic device. For example, while a larger number or size of lenses may make it easier to secure optical performance in the imaging device, the miniaturized electronic device may have reduced design freedom in arranging lens(es) and/or an image sensor. Therefore, a plurality of camera modules that provide good optical performance within specified viewing angle ranges, such as a telephoto camera, a wide-angle camera, an ultra-wide-angle camera, and/or a macro camera, may be integrated into a single electronic device. A telephoto camera, which has a narrower viewing angle and a longer focal length than other camera modules, may include an optical member (e.g., a prism or mirror) that transforms an optical path, which makes it easier to mount the telephoto camera on a miniaturized electronic device. For example, when an optical member like a mirror or prism is disposed, the arrangement of lens(es) and/or an image sensor may become easy. However, when an additional optical member is disposed, the number of reflections or refractions in a path leading to the image sensor may increase. This may result in an increase in light reaching the image sensor through a path other than a designed path. Light incident through an unintended path or the resulting degradation in image quality may be referred to as 'stray light' or 'flare'.

An embodiment of the disclosure is to address at least the above-mentioned problems and/or disadvantages and to provide at least the advantages described below. Accordingly, an embodiment of the disclosure may provide a camera module including an optical member that reflects or refracts light guided to an image sensor at least once, and/or an electronic device including the same.

An embodiment of the disclosure may provide a camera module which facilitates miniaturization, while offering telephoto performance by improving the design freedom of an optical path, and/or an electronic device including the same.

An embodiment of the disclosure may provide a camera module which may suppress stray light or flare caused by the reflection or refraction of light guided to an image sensor, while including an optical member, and/or an electronic device including the same.

The technical objects to be achieved in the disclosure are not limited to those mentioned above, and other unmentioned technical objects will be clearly understood by those skilled in the art from the following description.

The following description of the accompanying drawings may provide an understanding of various exemplary implementations of the disclosure, including the claims and their equivalents. While an exemplary embodiment disclosed in the following description includes various specific details to aid understanding, these are considered to be just one of various exemplary embodiments. Therefore, those skilled in the art will understand that various changes and modifications may be to various implementations of the disclosure without departing from the scope and spirit of the disclosure. Further, for clarity and conciseness, a description of well-known functions and configurations may be avoided.

The terms and words used in the following description and claims are not limited to their dictionary meanings but may be used to clearly and consistently describe an embodiment of the disclosure. Therefore, it will be apparent to those skilled in the art that the following description of various implementations of the disclosure is provided for illustrative purposes and not for the purpose of limiting the disclosure as defined by the scope of rights and equivalents thereof.

Unless the context clearly dictates otherwise, it should be understood that the singular forms "a," "an," and "the" include plural meanings. Thus, for example, "a component surface" may be understood to include one or more surfaces of a component.

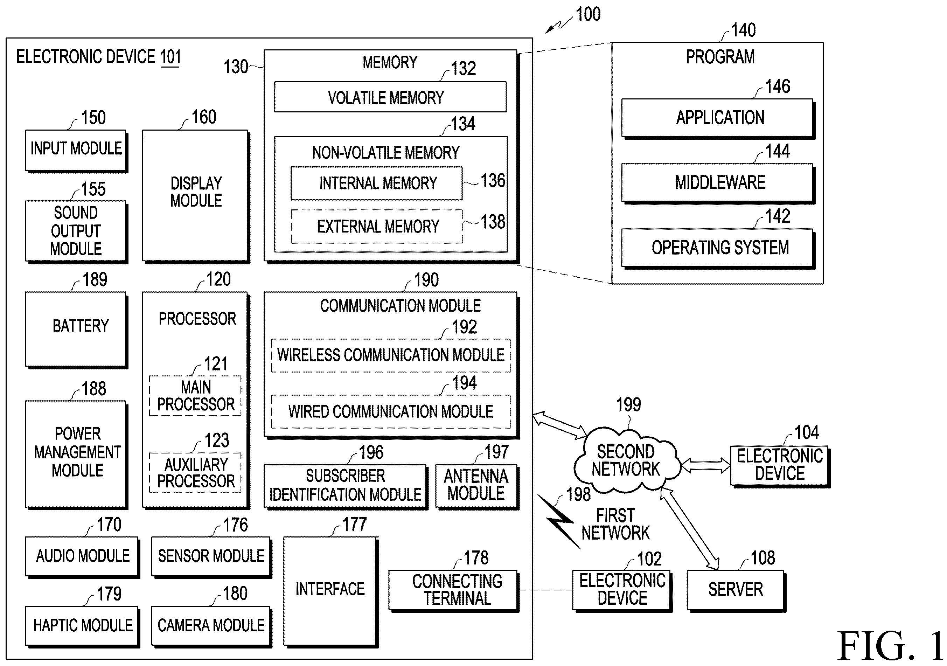

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it may be understood that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiment(s) of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In the following detailed description, a longitudinal direction, width direction, and/or thickness direction of the electronic device may be mentioned. The longitudinal direction may be defined as a 'Y-axis direction', the width direction as an 'X-axis direction', and/or the thickness direction as a 'Z-axis direction'. In an embodiment, regarding directions in which components are oriented, 'negative/positive (-/+)' may be mentioned together with the Cartesian coordinate system illustrated in the drawings. For example, the front surface of the electronic device and/or a housing may be defined as a 'surface facing a +Z direction', and the rear surface thereof may be defined as a 'surface facing a -Z direction'. In an embodiment, a side surface of the electronic device and/or the housing may include an area facing a +X direction, an area facing a +Y direction, an area facing a -X direction, and/or an area facing a -Y direction. In an embodiment, the 'X-axis direction' may mean both the '-X direction' and the '+X direction'. It should be noted that this is based on the Cartesian coordinate system illustrated in the drawings, for brevity of description, and that the description of these directions or components does not limit the embodiment(s) of the disclosure. For example, depending on the design specifications of the electronic device or the usage habits of a user, the Cartesian coordinate system may be defined differently from that of the disclosure.

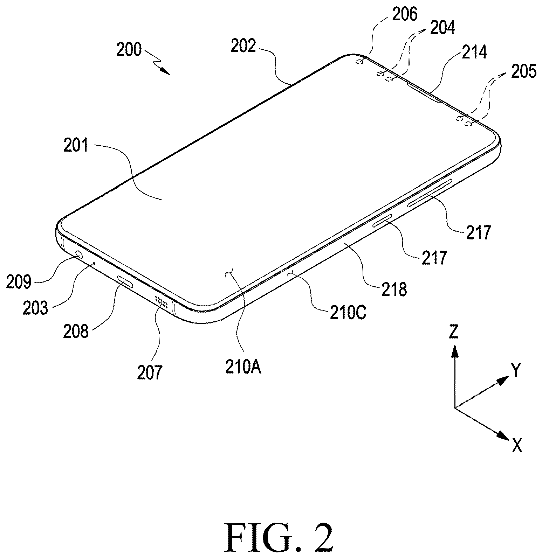

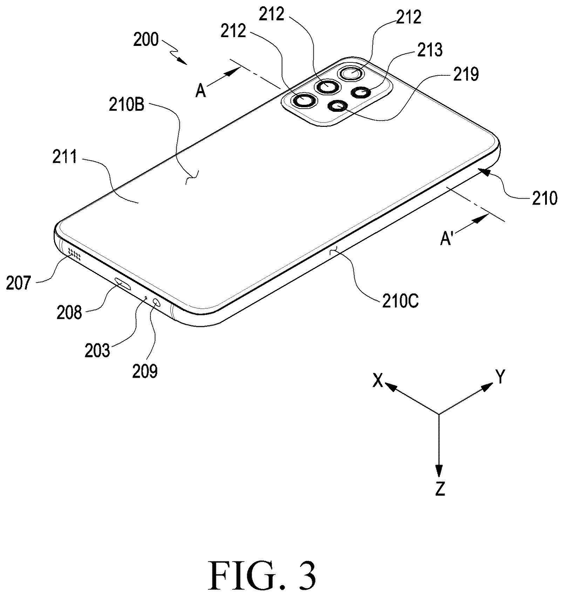

FIG. 2 is a front perspective view illustrating an electronic device 200 (e.g., the electronic device 101 of FIG. 1) according to an embodiment of the disclosure. FIG. 3 is a rear perspective view illustrating the electronic device 200 illustrated in FIG. 2 according to an embodiment of the disclosure.

Referring to FIGS. 2 and 3, the electronic device 200 (e.g., the electronic device 101 in FIG. 1) according to an embodiment may include a housing 210 which includes a first surface (or front surface) 210A, a second surface (or rear surface) 210B, and a side surface 210C surrounding a space between the first surface 210A and the second surface 210B. In an embodiment (not shown), the housing 210 may refer to a structure that forms a portion of the first surface 210A, the second surface 210B, and the side surfaces 210C of FIG. 2. According to an embodiment, at least a portion of the first surface 210A may be formed by a front plate 202 (e.g., a glass plate or polymer plate including various coating layers) which is at least partially substantially transparent. The second surface 210B may be formed by a rear plate 211 which is substantially opaque. The rear plate 211 may be formed of, for example, coated or tinted glass, ceramic, a polymer, a metal (e.g., aluminum, stainless steel (STS), or magnesium), or a combination of at least two of these materials. The side surface 210C may be coupled to the front plate 202 and the rear plate 211 and formed by a side structure (or "side bezel structure") 218 including a metal and/or a polymer. In an embodiment, the rear plate 211 and the side structure 218 may be integrally formed and include the same material (e.g., a metal material such as aluminum).

While not shown, the front plate 202 may include extended area(s) which are bent and extend seamlessly from at least a portion of an edge toward the rear plate 211. In an embodiment, the front plate 202 (or the rear plate 211) may include only one of the areas bent and extended toward the rear plate 211 (or the front plate 202) at one edge of the first surface 210A. According to an embodiment, the front plate 202 or the rear plate 211 may have a substantially flat shape, and in this case, may not include any bent and extended area. When a bent and extended area is included, the electronic device 200 may have a smaller thickness in a portion including the bent and extended area than in the other portions.

According to an embodiment, the electronic device 200 may include at least one of a display 201, audio modules 203, 207, and 214, sensor modules 204 and 219, camera modules 205, 212, and 213, key input devices 217, a light emitting element 206, or connector holes 208 and 209. In an embodiment, the electronic device 101 may not be provided with at least one (e.g., a key input device 217 or the light emitting element 206) of the components or may additionally include other components.

The display 201 may be exposed, for example, through a substantial portion of the front plate 202. In an embodiment, at least a portion of the display 201 may be exposed through the front plate 202 forming the first surface 210A or a portion of the side surface 210C. In an embodiment, a corner of the display 201 may be formed substantially in the same shape as that of an adjacent periphery of the front plate 202. In an embodiment (not shown), a gap between the periphery of the display 201 and the periphery of the front plate 202 may be substantially equal to increase the visually exposed area of the display 201.

In an embodiment (not shown), a recess or an opening may be formed in a portion of a screen display area, and at least one of the audio module 214, the sensor module 204, the camera module 205, or the light emitting element 206, which is aligned with the recess or the opening, may be included. In an embodiment (not shown), at least one of the audio module 214, the sensor module 204, the camera modules 205, a fingerprint sensor (not shown), or the light emitting element 206 may be included on the rear surface of the screen display area of the display 201. In an embodiment (not shown), the display 201 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 204 and 219 and/or at least some of the key input devices 217 may be disposed in the first areas 210D and/or the second areas 210E.

The audio modules 203, 207, and 214 may include a microphone hole 203 and speaker holes 207 and 214. A microphone for obtaining an external sound may be disposed in the microphone hole 203, and in an embodiment, a plurality of microphones may be disposed to detect the direction of a sound. The speaker holes 207 and 214 may include an external speaker hole 207 and a receiver hole 214 for calls. In an embodiment, the speaker holes 207 and 214 and the microphone hole 203 may be implemented as a single hole, or a speaker (e.g., a piezo speaker) may be included without the speaker holes 207 and 214.

The sensor modules 204 and 219 may generate an electrical signal or data value corresponding to an internal operating state or an external environmental state of the electronic device 200. The sensor modules 204 and 219 may include, for example, a first sensor module 204 (e.g., a proximity sensor) and/or a second sensor module (not shown) (e.g., a fingerprint sensor), disposed on the first surface 210A of the housing 210, and/or a third sensor module 219 and/or a fourth sensor module (e.g., a fingerprint sensor), disposed on the second surface 210B of the housing 210. The fingerprint sensors may be disposed on the second surface 210B or the side surface 210C as well as on the first surface 210A (e.g., the display 201) of the housing 210. The electronic device 200 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor 204.

The camera modules 205, 212, and 213 may include a first camera module 205 disposed on the first surface 210A of the electronic device 200, and a second camera module 212 and/or a flash 213 disposed on the second surface 210B. The camera modules 205 and 212 may include one or more lenses, an image sensor, and/or an ISP. The flash 213 may include, for example, a light emitting diode (LED) or a xenon lamp. In an embodiment, two or more lenses (an IR camera, a wide-angle lens, and a telephoto lens) and image sensors may be arranged on one surface of the electronic device 200. In an embodiment, the flash 213 may emit IR light, and IR light emitted by the flash 213 and reflected from an object may be received through the third sensor module 219. The electronic device 200 or the processor of the electronic device 200 may detect depth information of the object based on a time at which the IR light is received by the third sensor module 219.

The key input devices 217 may be disposed on the side surface 210C of the housing 210. In an embodiment, the electronic device 200 may not include some or any of the key input devices 217, and the key input devices 217 which are not included may be implemented in other forms such as soft keys on the display 201. In an embodiment, the key input devices may include a sensor module 316 disposed on the second surface 210B of the housing 210.

The light emitting element 206 may be disposed, for example, on the first surface 210A of the housing 210. The light emitting element 206 may provide, for example, state information about the electronic device 200 in the form of light. In an embodiment, the light emitting element 206 may provide, for example, a light source interworking with an operation of the camera module 205. The light emitting element 206 may include, for example, an LED, an IR LED, and a xenon lamp.

The connector holes 208 and 209 may include a first connector hole 208 capable of accommodating a connector (e.g., a USB connector) for transmitting and receiving power and/or data to and from an external electronic device and/or a second connector hole (e.g., an earphone jack) 209 capable of accommodating a connector for transmitting and receiving an audio signal to and from an external electronic device.

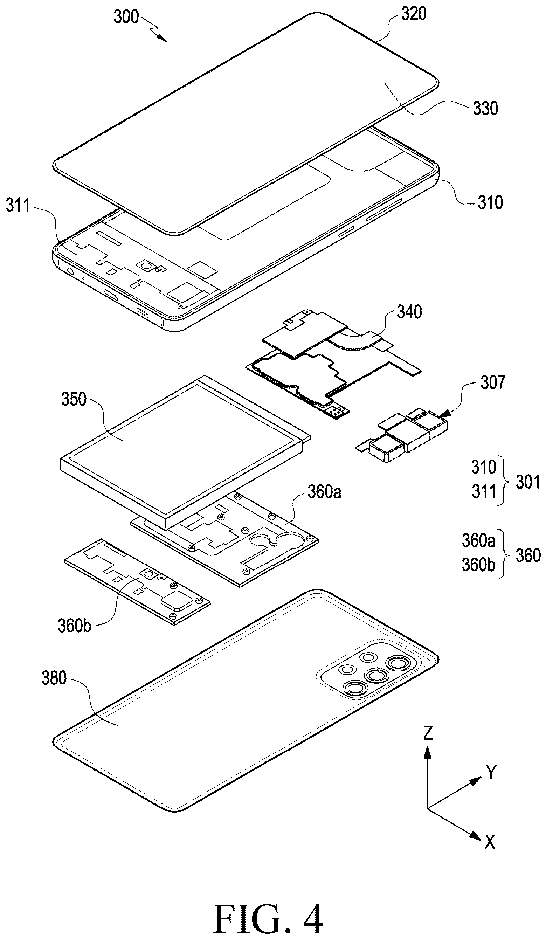

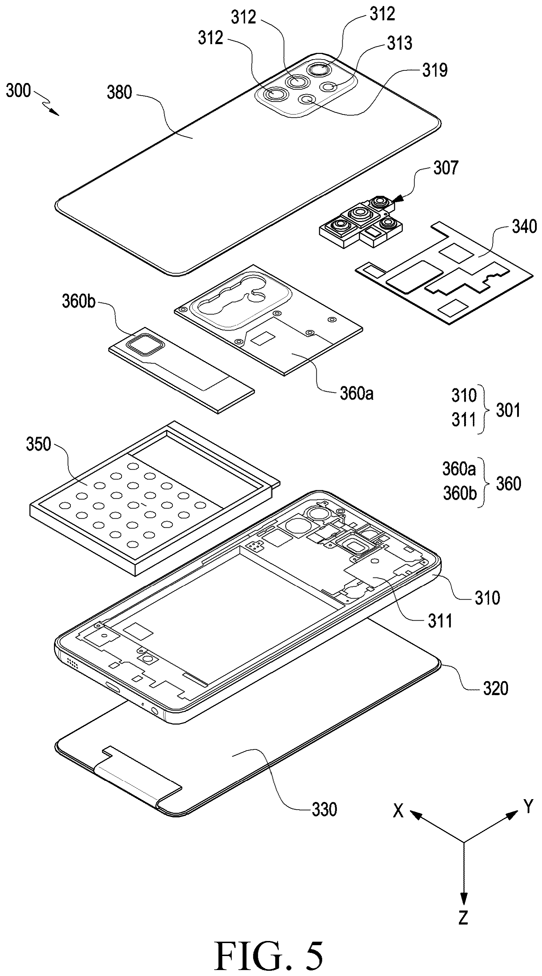

FIG. 4 is an exploded perspective view illustrating the front surface of the electronic device 200 illustrated in FIG. 2 according to an embodiment of the disclosure. FIG. 5 is an exploded perspective view illustrating the rear surface of the electronic device 200 illustrated in FIG. 2 according to an embodiment of the disclosure.

Referring to FIGS. 4 and 5, an electronic device 300 (e.g., the electronic device 200 of FIG. 2 or 3) may include a side structure 310, a first support member 311 (e.g., a bracket), a front plate 320 (e.g., the front plate 202 of FIG. 2), a display 330 (e.g., the display 201 of FIG. 2), a printed circuit board (or a board assembly) 340, a battery 350, a second support member 360 (e.g., a rear case), an antenna, a camera assembly 307, and a rear plate 380 (e.g., the rear plate 211 of FIG. 3). In an embodiment, the electronic device 300 may not be provided with at least one (e.g., the first support member 311 or the second support member 360) of the components or may additionally include other components. At least one of the components of the electronic device 300 may be identical or similar to at least one of the components of the electronic device 200 in FIG. 2 or FIG. 3, and any redundant description will be omitted below.

The first support member 311 may be disposed inside the electronic device 300 and connected to the side structure 310, or may be formed integrally with the side structure 310. The first support member 311 may be formed of, for example, a metal material and/or a non-metallic (e.g., polymer) material. When formed at least partially of a metal material, the side structure 310 or a portion of the first support member 311 may function as an antenna. The first support member 311 may have one surface coupled to a display 330 and the other surface coupled to the printed circuit board 340. A processor, memory, and/or an interface may be mounted on the printed circuit board 340. The processor may include, for example, one or more of a central processing unit, an application processor, a graphics processing unit, an image signal processor, a sensor hub processor, or a communication processor.

In an embodiment, the first support member 311 and the side structure 310 may be combined to be referred to as a front case or a housing 301. In an embodiment, the housing 301 may be generally understood as a structure for receiving, protecting, or disposing the printed circuit board 340 or the battery 350. In an embodiment, the housing 301 may be understood as including a structure that may be visually or tactilely recognized by a user on the exterior of the electronic device 300, for example, the side structure 310, the front plate 320, and/or the rear plate 380. In an embodiment, the 'front or rear surface of the housing 301' may refer to the first surface 210A of FIG. 2 or the second surface 210B of FIG. 3. In an embodiment, the first support member 311 may be located between the front plate 320 (e.g., the first surface 210A of FIG. 2) and the rear plate 380 (e.g., the second surface 210B of FIG. 3) and function as a structure on which electrical/electronic components such as the printed circuit board 340 or the camera assembly 307 are disposed.

The memory may include, for example, volatile memory or nonvolatile memory.

The interface may include, for example, a high definition multimedia interface (HDMI), a universal serial bus (USB) interface, an SD card interface, and/or an audio interface. The interface may, for example, electrically or physically connect the electronic device 300 to an external electronic device, and may include a USB connector, an SD card/MMC connector, or an audio connector.

The second support member 360 may include, for example, an upper support member 360a and a lower support member 360b. In an embodiment, the upper support member 360a may be disposed to surround the printed circuit board 340, together with a portion of the first support member 311. A circuit device (e.g., a processor, a communication module, or memory) implemented in the form of an integrated circuit chip or various electrical/electronic components may be disposed on the printed circuit board 340, and according to an embodiment, the printed circuit board 340 may be provided with an electromagnetic shielding environment from the upper support member 360a. In an embodiment, the lower support member 360b may be used as a structure on which electrical/electronic components such as a speaker module and an interface (e.g., a USB connector, an SD card/MMC connector, or an audio connector) may be disposed. In an embodiment, electrical/electronic components such as a speaker module and an interface (e.g., a USB connector, an SD card/MMC connector, or an audio connector) may be disposed on an additional printed circuit board (not shown). In this case, the lower support member 360b may be disposed to surround the additional printed circuit board, together with another portion of the first support member 311. The speaker module or interface disposed on the additional printed circuit board not shown or the lower support member 360b may be disposed to correspond to the audio module 207 or the connector hole 208 and 209 of FIG. 2.

The battery 350, which is a device for supplying power to at least one component of the electronic device 300, may include, for example, a non-rechargeable primary battery, a rechargeable secondary battery, or a fuel cell. At least a portion of the battery 350 may be disposed substantially on the same plane as, for example, the printed circuit board 340. The battery 350 may be integrally disposed within the electronic device 300, and may also be detachably disposed in the electronic device 300.

Although not shown, the antenna may include a conductive pattern implemented on the surface of the second support member 360, for example, by laser direct structuring. In an embodiment, the antenna may include a printed circuit pattern formed on the surface of a thin film, and the thin film-shaped antenna may be disposed between the rear plate 380 and the battery 350. The antenna may include, for example, a near field communication (NFC) antenna, a wireless charging antenna, and/or a magnetic secure transmission (MST) antenna. The antenna may, for example, perform short-range communication with an external device or wirelessly transmit and receive power required for charging. In an embodiment, another antenna structure may be formed by a portion or combination of the side structure 310 and/or the first support member 311.

The camera assembly 307 may include at least one camera module, for example, at least one of camera modules 371, 372, 373, and 374 of FIG. 5. Inside the electronic device 300, the camera assembly 307 may receive at least a portion of light incident through an optical hole or camera windows 312, 313, and 319. In an embodiment, the camera assembly 307 may be disposed on the first support member 311 at a location adjacent to the printed circuit board 340. In an embodiment, the camera modules of the camera assembly 307 may be generally aligned with one of the camera windows 312, 313, and 319 and at least partially surrounded by the second support member 360 (e.g., the upper support member 360a). In disposing the camera assembly 307 or the camera modules 371, 372, 373, and 374, the electronic device 300 or the first support member 311 may include at least one structure, such as a support wall or an elastic member, to mount or secure the camera assembly 307.

In the detailed description below, reference may be made to the electronic devices 200 and 300 of the preceding embodiments, and it should be noted that the same reference numerals or no reference numerals may be assigned to components which may be easily understood through the preceding embodiments in the drawings, and their detailed description may also be avoided.

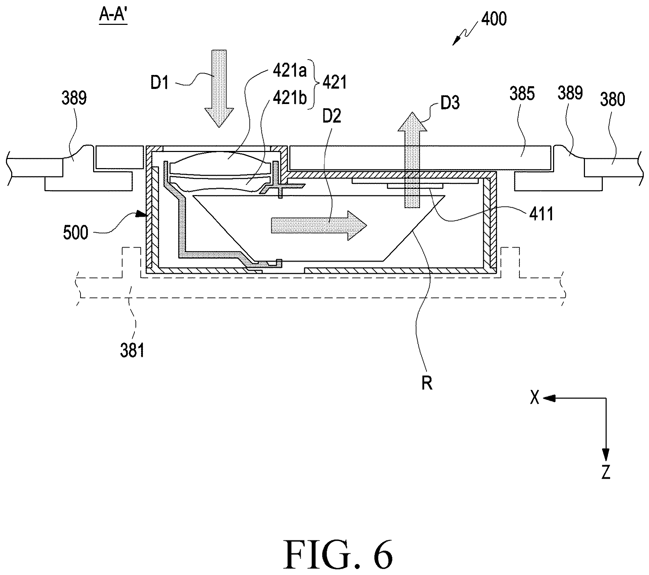

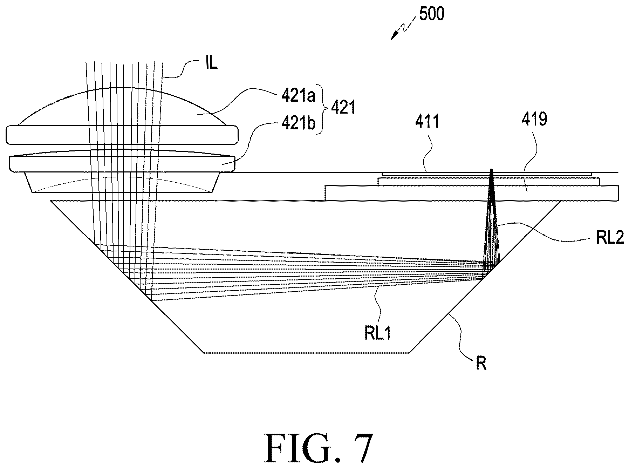

FIG. 6 is a cross-sectional view illustrating a portion of an electronic device 400 (e.g., the electronic devices 101, 200, and 300 of FIGS. 1 to 5) according to an embodiment of the disclosure, taken along A-A' in FIG. 3. FIG. 7 is a configuration diagram illustrating an optical path of a camera module 500 in the electronic device 400 according to an embodiment of the disclosure.

Referring to FIGS. 3 and 6, the electronic device 400 (e.g., the electronic devices 101, 200, and 300 of FIGS. 1 to 5) according to an embodiment of the disclosure may include a cover plate 385 disposed on one surface (e.g., the second surface 210B in FIG. 3) thereof. In an embodiment, the cover plate 385 may be a portion of the rear plate 380. In an embodiment, the cover plate 385 may be coupled to the rear plate 380 through a deco member 389, and when viewed from the outside, the deco member 389 may be exposed in a form that surrounds the perimeter of the cover plate 385. According to an embodiment, the cover plate 385 may provide a plurality of transparent areas, and the electronic device 400 may receive external light or emit light to the outside through at least one of the transparent areas. For example, the electronic device 400 may include at least one camera module 500 (e.g., the camera modules 180, 205, 212, and 213 of FIGS. 1 to 3) corresponding to at least some of the transparent areas and at least one light source (e.g., a flash or an IR light source) corresponding to others of the transparent areas. In an embodiment, the camera module 500 and/or the light source may receive external light or emit light to the outside of the electronic device 400. In an embodiment, the electronic device 400 and/or the camera module 500 may further include a camera support member 381. The camera support member 381 may dispose or fix at least one of the camera module 500 and/or another adjacent camera module (e.g., a wide-angle camera, an ultra-wide-angle camera, and/or a macro camera) on the inner side of the rear plate 380 and/or the cover plate 385. In an embodiment, the camera support member 381 may be substantially a portion of the first support member 311 and/or the second support member 360 of FIG. 4.

According to an embodiment, the electronic device 400 may include at least one of a wide-angle camera, an ultra-wide-angle camera, a macro camera, a telephoto camera, or an IR photodiode as the camera module 500 and/or a light-receiving element, and may include a flash (e.g., the flash 213 in FIG. 3) or an IR laser diode as a light source and/or a light-emitting element. In an embodiment, the electronic device 400 may detect the distance to an object and/or a depth by radiating IR laser light toward the object and receiving the IR laser light reflected by the object using an IR laser diode and an IR photodiode. In an embodiment, the electronic device 400 may capture an object by combining one or more of the cameras, and provide illumination toward the object using the flash as needed.

According to an embodiment, among the cameras, the wide-angle camera, the ultra-wide-angle camera, and/or the macro camera may have a shorter length in an optical axis direction of lens(es), compared to a telephoto camera (e.g., the camera module 500). For example, the telephoto camera (e.g., the camera module 500), which has a relatively small field of view and a relatively long focal length, may have a longer overall lens length than other cameras (e.g., the wide-angle camera, the ultra-wide-angle camera, and/or the macro camera). The term 'overall lens length' may be the distance from an object-side surface of the first object-side lens to an imaging plane of an image sensor 411. As in the camera module 500 of FIG. 6, when another optical member (e.g., a mirror and/or a prism) is disposed between the lens(es) and the image sensor, the 'overall lens length' may be the distance from the object-side surface of the first object-side lens to a sensor-side surface of the first sensor-side lens. In an embodiment, even when the lens(es) are arranged along the thickness direction of the electronic device 400 (e.g., the direction of a thickness measured in a Z-axis direction of FIGS. 2 to 6), the wide-angle camera, the ultra-wide-angle camera, and/or the macro camera may not significantly affect the thickness of the electronic device 400. For example, the wide-angle camera, the ultra-wide-angle camera, and/or the macro camera may be disposed in the electronic device 400 in a state where the direction of light incident on the electronic device 400 from the outside and the optical axis direction of the lens(es) are substantially the same. In an embodiment, compared to the wide-angle camera, the ultra-wide-angle camera, and/or the macro camera, the camera module 500 (e.g., the telephoto camera) may have a small field of view, but may be useful for capturing an object at a longer distance. In an embodiment of the disclosure, the camera module 500 may include at least one optical member R that reflects and/or refracts incident light IL in another direction. The camera module 500 may easily implement a telephoto function, while suppressing an increase in the thickness of the electronic device 400, by including the at least one optical member R.

Referring to FIGS. 6 and 7, a folded camera (e.g., the camera module 500) may include a lens assembly 421 (e.g., lenses 421a and 421b), the at least one optical member R (e.g., a refractive member or a reflective member), and/or the image sensor 411. In an embodiment, the at least one optical member R may reflect or refract light (e.g., incident light IL) focused or guided by the lens assembly 421 at least once and guide it to the image sensor 411. In an embodiment, the optical member R may include, for example, a prism and/or a mirror. For example, the optical member R may be formed as a prism including at least one mirror. In an embodiment, the optical member R may reflect and/or refract the light IL incident in a first direction D1 into a second direction D2 crossing the first direction D1. The first direction D1 may mean, for example, a direction in which the light IL is incident from the outside to the electronic device 400 and/or the camera module 500, when an object is captured. In an embodiment, the first direction D1 may refer to a capturing direction, an object direction, an orientation direction of the camera module 500, and/or a direction parallel thereto. In an embodiment, the first direction D1 may be parallel to the thickness direction of the electronic device 400 and/or the Z-axis direction.

According to an embodiment, light RL1 that is reflected or refracted inside the optical member R and travels in the second direction D2 may be reflected and/or refracted by another area inside the optical member R and travel in a third direction D3 crossing the second direction D2. In an embodiment, the third direction D3 may be substantially perpendicular to the second direction D2. For example, the third direction D3 may mean a direction parallel to the Z-axis direction. However, embodiment(s) of the disclosure are not limited thereto, and the third direction D3 may be a direction inclined with respect to the second direction D2 and/or an X-Y plane depending on the arrangement and specifications of the camera module 500 and/or the optical member R in the electronic device 400. In an embodiment, the third direction D3 may be substantially parallel to the first direction D1.

According to an embodiment, the image sensor 411 may be configured to detect light RL2 that travels along the third direction D3 after being reflected and/or refracted at least once inside the optical member R. For example, the light IL incident from the outside may be detected by the image sensor 411 after being reflected or refracted at least once (e.g., twice in the illustrated embodiment) inside the optical member R, and the electronic device 400, the processor 120 of FIG. 1, and/or the camera module 500 may obtain an object image based on a signal and/or information detected through the image sensor 411. In an embodiment, the image sensor 411 may be disposed substantially parallel to the XY plane. For example, when the camera module 500 has an anti-shake function with a structure that shifts the image sensor 411, the image sensor 411 may be horizontally moved in a plane substantially perpendicular to the first direction D1 and/or the third direction D3.

According to an embodiment, in performing a hand tremor correction operation, the image sensor 411 may be shifted in the length direction (e.g., Y-axis direction) and/or the width direction (e.g., X-axis direction) of the electronic device 400. For example, as the image sensor 411 is disposed in the plane substantially perpendicular to the first direction D1 and/or the third direction D3, it may be easy to increase the size of the image sensor 411 and/or secure a space for the hand tremor correction operation in an electronic device with a small thickness (e.g., a thickness of approximately 10 mm or less). In an embodiment, when the camera module 500 is used as a telephoto camera, the quality of a captured image may be further enhanced by incorporating the anti-shake function. In an embodiment, when the image sensor 411 is enlarged, the performance of the camera module 500 may be further improved.

According to an embodiment, the lens assembly 421 may guide and/or focus the light IL incident in the first direction D1 to the optical member R. In an embodiment, the lens assembly 421 and/or the first lens (e.g., the first lens 421a) disposed on an object side in the camera module 500 may have a positive refractive power. For example, as the first lens 421a is configured to focus and/or align the light IL incident from the outside to the optical member R, an optical system from the first lens 421a to the image sensor 411 may be miniaturized. In an embodiment, the lens assembly 421 may further include an additional lens (e.g., the second lens(es) 421b) for focusing and/or aligning the light incident from the outside.

According to an embodiment, at least one of the first lens 421a and/or the second lens(es) 421b may move forward and backward in a direction in which light is incident (e.g., the first direction D1 in FIG. 6). For example, the electronic device 400 and/or the camera module 500 may perform focal length adjustment and/or focus adjustment by moving at least one of the first lens 421a and/or the second lens(es) 421b forward and backward. In an embodiment, focal length adjustment and/or focus adjustment may be performed by moving the image sensor 411 forward and backward along a direction in which the light indicated by 'RL2' is incident (e.g., the third direction D3 in FIG. 6).

According to an embodiment, the electronic device 400 and/or the camera module 500 may further include an IR cut filter 419. In an embodiment, the IR cut filter 419 may suppress or substantially block light in the IR and/or near-IR wavelength bands from being incident on the image sensor 411, and may be disposed at any position in an optical path between the first lens 421a and the image sensor 411. In an embodiment, as the IR cut filter 419 is disposed at a position close to the image sensor 411 (e.g., between the image sensor 411 and the optical member R), visual exposure of the IR cut filter 419 to the outside may be suppressed and/or prevented. In an embodiment, the optical member R may include an IR cut coating layer, in which case the IR cut filter 419 may be omitted. As a result, the image sensor 411 may substantially detect light that has passed through the IR cut filter 419 (or the IR cut coating layer).

The optical member R according to embodiment(s) of the disclosure may be optionally designed according to the structure of the camera module 500. For example, in an embodiment, the optical member R may have a triangular prism shape. In an embodiment, the optical member R may have a trapezoidal prism shape. The shape of the optical member R is not limited to the structure shown in the disclosure. For example, when the optical member R reflects, refracts, or transmits light, the optical member R may have a structure (e.g., a parallelogram prism shape) other than a triangular prism or a trapezoidal prism. In an embodiment, various types of optical members R may be arranged. For example, the optical member R may be disposed as a prism. For example, the optical member R may be disposed as at least one mirror. In an embodiment, the optical member R may include a substantially transparent material. For example, the optical member R may be made of glass.

According to an embodiment, the optical member R may be implemented by combining a plurality of prisms or mirrors. For example, an optical member R in the shape of a parallelogram prism or a trapezoidal prism may be implemented by combining a triangular prism and/or a quadrilateral prism. As such, in implementing the optical member R according to embodiment(s) of the disclosure, it should be noted that various optical elements such as a reflective member, a prism, and/or a mirror may be selectively combined, and the shape or number of the optical elements are not limited to the embodiments illustrated in the drawings. In an embodiment, when the optical member R is implemented by combining a plurality of optical elements, it may be easy to dispose a light blocking structure. The 'light blocking structure' may refer to a structure that suppresses, mitigates, or blocks light incident on the optical member R through an unintended path or light traveling in an unintended path inside the optical member R from reaching the image sensor 411. The configuration of the optical member R will be more easily understood from the embodiments described later.

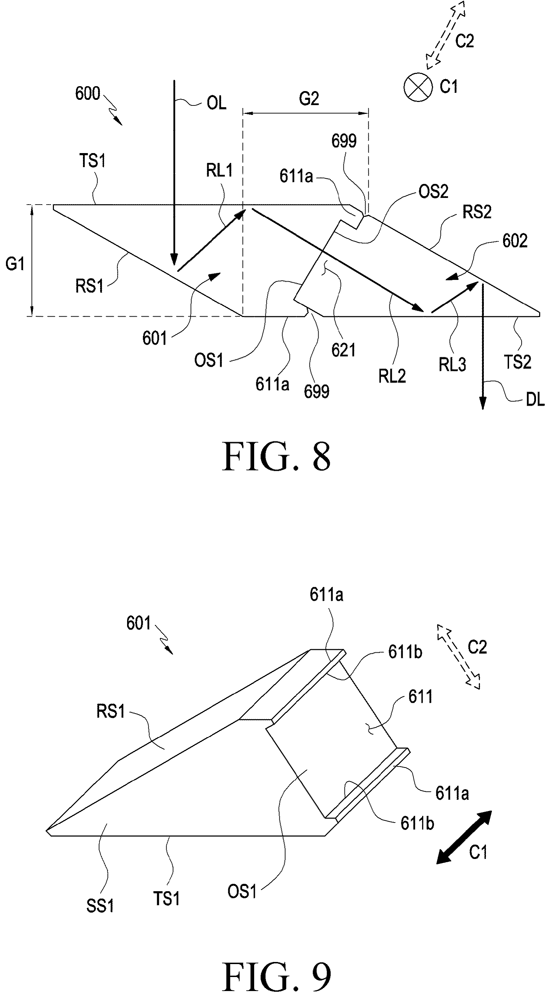

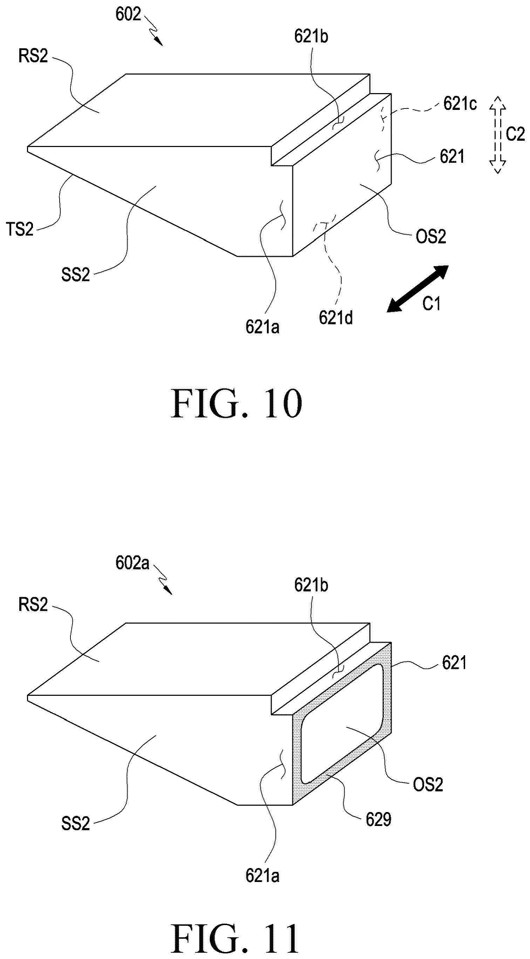

FIG. 8 is a diagram illustrating an optical member 600 (e.g., the optical member R of FIG. 6 or 7) of a camera module according to an embodiment of the disclosure. FIG. 9 is a perspective view illustrating a first reflective member 601 in the optical members 600 of FIG. 8 according to an embodiment of the disclosure. FIG. 10 is a perspective view illustrating a second reflective member 602 in the optical members 600 of FIG. 8 according to an embodiment of the disclosure.

As mentioned earlier, the optical member 600 according to embodiment(s) of the disclosure may be implemented by combining a plurality of optical elements (e.g., the first reflective member 601 and the second reflective member 602), and the optical member 600 implemented by combining two optical elements may be disclosed in the illustrated embodiment. In an embodiment, the first reflective member 601 (or the second reflective member 602) in the optical member 600 of FIG. 8 may be implemented by combining one triangular prism and one quadrilateral prism. In the illustrated embodiment, light OL incident from the outside is exemplified as being reflected four times inside the optical member 600 and then output from the optical member 600, to which the embodiment of the disclosure is not limited. For example, it should be noted that the number of reflections and an optical path inside the optical member 600 may be different from those illustrated in the drawings depending on angles formed by transmissive surface(s) TS1 and TS2 and reflective surfaces RS1 and RS2.

Referring further to FIGS. 8 to 10, the optical member 600 may include a plurality of reflective members 601 and 602 disposed to face each other, and one of the plurality of reflective members 601 and 602 may accommodate at least a portion of the other of the plurality of reflective members 601 and 602 on a surface thereof facing the other. Herein, 'accommodating a portion' may be understood to include an arrangement structure that surrounds a portion of a first surface of one reflective member and a portion of a surface disposed adjacent to and inclined or perpendicular to the first surface. In an embodiment, the first reflective member 601 out of the plurality of reflective members 601 and 602 may include a receiving groove 611 on a surface facing the second reflective member 602 out of the plurality of reflective members 601 and 602, and an alignment direction (or alignment position) of the second reflective member 602 with respect to the first reflective member 601 may be set by accommodating a portion (e.g., a protrusion 621) of the second reflective member 602 in the receiving groove 611.

According to an embodiment, the second reflective member 602 may include the protrusion 621 in a shape corresponding to the receiving groove 611, on a surface thereof facing the first reflective member 601. In an embodiment, on the surface facing the second reflective member 602, the first reflective member 601 may include stepped portion(s), and the second reflective member 602 may be understood as being accommodated in a low area (or deep area) implemented by the stepped portion(s) of the first reflective member 601. In the illustrated embodiment, it may be understood that the stepped portion(s) are implemented by a height difference or depth difference between a top end of a guide wall 611a and a bottom surface of the receiving groove 611. In an embodiment, the second reflective member 602 may be partially accommodated in the receiving groove 611 of the first reflective member 601, and an outer surface (e.g., second side surface(s) SS2) of the second reflective member 602 and an outer surface (e.g., first side surface(s) SS1) of the first reflective member 601 may be aligned to form a substantially continuous curved surface or continuous plane.

In the illustrated embodiment, the receiving groove 611 is shown as being formed in the first reflective member 601, to which embodiment(s) of the disclosure are not limited. For example, a groove structure may be provided in the second reflective member 602, and a protrusion structure may be provided in the first reflective member 601. In the illustrated embodiment, the external light OL is shown as being incident on the first reflective member 601, and light that sequentially passes through the first reflective member 601 and the second reflective member 602 is shown as being output from the second reflective member 602, to which embodiment(s) of the disclosure are not limited. For example, the external light OL may be incident on the second reflective member 602, in which case light DL incident on an image sensor (e.g., the image sensor 411 of FIG. 6) may be substantially output from the first reflective member 601.

According to an embodiment, the first reflective member 601 may include a first optical surface OS1 facing the second reflective member 602. When the first reflective member 601 includes the receiving groove 611 on one surface thereof (e.g., the surface facing the second reflective member 602), the first optical surface OS1 may be understood as at least a portion of an area provided by the receiving groove 611 or the stepped portion(s). For example, when the first reflective member 601 includes the receiving groove 611, the first optical surface OS1 may be understood as being implemented by the bottom surface of the receiving groove 611.

According to an embodiment, when including the receiving groove 611, the first reflective member 601 may include the guide wall 611a provided on at least one side of the receiving groove 611. In the illustrated embodiment, a pair of guide walls 611a extending along a first extension direction C1 are shown. For example, the pair of guide walls 611a may be disposed to face each other along a direction (e.g., a second extension direction C2 crossing the first extension direction C1, with the receiving groove 611 in between. For example, when the protrusion 621 is accommodated in the receiving groove 611, the second reflective member 602 (e.g., the protrusion 621) may move to the first reflective member 601 in the first extension direction C1 while being guided by the guide walls 611a, while its movement in the second extension direction C2 may be suppressed or restricted by the guide walls 611a. In an embodiment, the first optical surface OS1 may be understood as an area between the guide walls 611a on one surface (e.g., the surface facing the second reflective member 602) of the first reflective member 601.

As will be described later, the structure of the receiving groove 611 or the protrusion 621 may maintain the distance between surfaces that transmit, reflect, or refract light within a designated range in an optical path guided to the image sensor 411 via the optical member 600. For example, when the protrusion 621 is at least partially accommodated in the receiving groove 611 and the movement in the second extension direction C2 is restricted, a first distance G1 between a first transmissive surface TS1 and a second transmissive surface TS2 or a second distance G2 between a first reflective surface RS1 and a second reflective surface RS2 may be maintained substantially constant. In an embodiment, even if the first reflective member 601 and the second reflective member 602 move relative to each other in the aforementioned first extension direction C1, the distance G1 or G2 between the reflective or refractive surfaces may not change substantially. In an embodiment, when the first reflective member 601 and the second reflective member 602 move relative to each other in the aforementioned second extension direction C2, the distance G1 or G2 between the reflective or refractive surfaces may differ from design specifications. For example, in embodiment(s) of the disclosure, in coupling the reflective members 601 and 602 to each other, the structure of the receiving groove 611 or the protrusion 621 may suppress the distortion of optical performance and implement the optical member 600 that conforms to the design specifications.

According to an embodiment, the first reflective member 601 may include the first transmissive surface TS1 that receives light or reflects the incident light and/or the first reflective surface RS1. The first transmissive surface TS1 is disposed inclined with respect to the first optical surface OS1, and may refer to a surface on which the external light OL is incident on the optical member 600 (e.g., the first reflective member 601. The first reflective surface RS1 may be understood as, for example, a surface inclined with respect to the first optical surface OS1 and/or the first transmissive surface TS1, and may reflect at least a portion of light traveling inside the optical member 600 (e.g., the first reflective member 601). In an embodiment, the optical member 600 (e.g., the first reflective member 601) may include a reflective coating or a mirror disposed on the first reflective surface RS1.

According to an embodiment, in a side view such as in FIG. 8, the first optical surface OS1, the first transmissive surface TS1, and/or the first reflective surface RS1 may be disposed in a substantially triangular shape. For example, one of the first optical surface OS1, the first transmissive surface TS1, and/or the first reflective surface RS1 may be understood as connecting edges of the other two surfaces. However, it should be noted that in the illustrated embodiment, the first reflective member 601 is shown in a polygonal shape other than a triangle, because a portion that does not affect the path of the external light OL to the image sensor 411 has been removed partially. In the embodiments to be described later, the first transmissive surface TS1 and/or the first reflective surface RS1 may be referred to as a 'first surface'. Together with a 'second surface' to be described later, the first surface may be understood as a surface that provides an area for transmitting, reflecting, or refracting light guided to the image sensor 411.

According to an embodiment, the first reflective member 601 may include the first side surface(s) SS1 that provides at least a portion of the outer surface, along with the first optical surface OS1, the first transmissive surface TS1, and/or the first reflective surface RS1. The first side surface(s) SS1 may be disposed substantially parallel to light traveling inside the optical member 600 (e.g., light to be guided to the image sensor 411 or light incident perpendicularly on the first transmissive surface TS1). Depending on the design of the optical member 600, the first side surface(s) SS1 may be disposed inclined with respect to the light traveling inside the optical member 600. In an embodiment, even in a structure where the first side surface(s) SS1 are disposed inclined with respect to the light travel path inside the optical member 600, the light (e.g., light to be guided to the image sensor 411 or light incident perpendicularly on the first transmissive surface TS1) may not substantially cross the first side surface(s) SS1 inside the optical member 600.

Although not shown, at least a portion of an area where light does not pass through, an area that does not reflect or refract light, and/or an area that does not intersect with light may be provided with a substance that does not transmit light (hereinafter, 'light blocking material'). For example, in an area of the first transmissive surface TS1 other than the area where light to be guided to the image sensor 411 passes, a light blocking layer (or a light blocking member) such as a light-reflecting coating or a light-absorbing coating may be provided. The light blocking material may be provided on at least a portion of the surfaces of the guide walls 611a or the first side surface(s) SS1. In an embodiment, the light blocking layer may be formed by printing, painting, coating, or deposition plating, and implemented in the form of a light blocking film or a light blocking sheet. In an embodiment, in an area of the first reflective surface RS1 or the first optical surface OS1 other than the area where light to be guided to the image sensor 411 passes, a light blocking member may be provided. This light blocking member may be similarly provided on the second reflective member 602, and will be described again with reference to FIG. 11.

According to an embodiment, the second reflective member 602 may include a second optical surface OS2 facing the first reflective member 601. When the second reflective member 602 includes the protrusion 621 on one surface thereof (e.g., the surface facing the first reflective member 601), the second optical surface OS2 may be understood as being provided on the surface of the protrusion 621. For example, when the second reflective member 602 includes the protrusion 621, the second optical surface OS2 may be understood as being implemented by a portion of the top surface of the protrusion 621. In an embodiment, when including the protrusion 621, the second reflective member 602 and/or the protrusion 621 may include a plurality of side surfaces 621a, 621b, 621c, and 621d extending perpendicularly or obliquely from edges of the second optical surface OS2. In an embodiment, at least one (e.g., side surface(s) indicated by reference numeral '621b' and/or '621d') of the plurality of side surfaces 621a, 621b, 621c, and 621d may be aligned parallel to the first extension direction C1 and disposed to face an inner wall of the receiving groove 611 ((e.g., inner surfaces 611b of the guide walls 611a) in a direction (e.g., the second extension direction C2) that crosses the first extension direction C1. For example, some of the plurality of side surfaces 621a, 621b, 621c, and 621d may allow or guide the first reflective member 601 and the second reflective member 602 to move relative to each other along the first extension direction C1, and/or may suppress the first reflective member 601 and the second reflective member 602 from moving relative to each other along the second extension direction C2. For example, the protrusion 621 and the receiving groove 611 may contribute to implementing the optical member 600 that conforms to design specifications in coupling the first reflective member 601 and the second reflective member 602 by setting relative positions of the first reflective member 601 and the second reflective member 602.

According to an embodiment, at least another one (e.g., side surface(s) indicated by reference numeral '621a' and/or '621c') of the plurality of side surfaces 621a, 621b, 621c, and 621d may be exposed to an outside space of the receiving groove 621, while orienting in the first extension direction C1. For example, the protrusion 621 may enter the receiving groove 621 substantially along the first direction D1, while being guided by the side surface(s) indicated by reference numeral '621b' and/or '621d' (or the inner surface(s) 611b of the guide walls 611a). However, embodiment(s) of the disclosure are not limited thereto, and the protrusion 621 may enter the receiving groove 611 along a direction in which the first reflective member 601 and the second reflective member 602 get closer or farther apart (e.g., a direction in which second reflected light RL2 in FIG. 8 travels or its reverse direction). In an embodiment, a side surface (e.g., the side surface(s) indicated by reference numeral '621a' and/or '621c') exposed to the outside space of the receiving groove 611 among the plurality of side surfaces 621a, 621b, 621c, and 621d may be disposed on a continuous curved surface or a continuous plane with at least some (e.g., the first side surface(s) SS1) of the surfaces of the first reflective member 601.

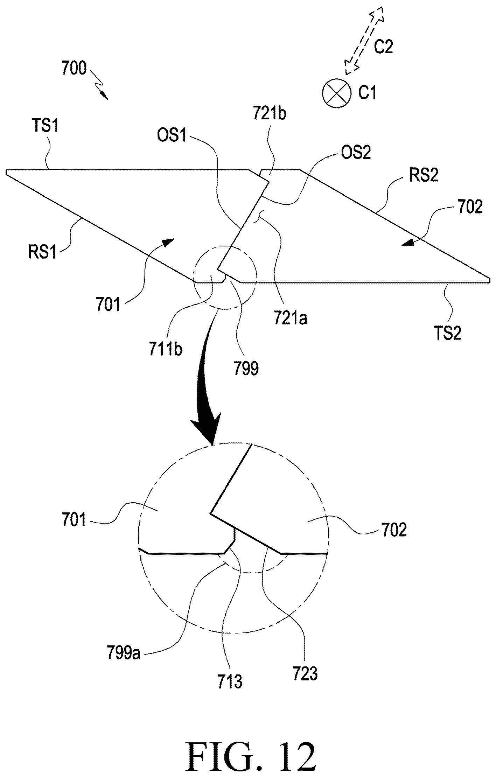

According to an embodiment, the optical member 600 may further include dummy groove(s) 699 provided on a boundary between the first reflective member 601 and the second reflective member 602. In an embodiment, a dummy groove 699 may be provided on a boundary between a side surface exposed to the outside space of the receiving groove 611 among the side surfaces 621a, 621b, 621c, and 621d of the protrusion 621 and a surface of the first reflective member 601. In an embodiment, the optical member 600 and/or the camera module 500 may further include an adhesive (e.g., an adhesive 799a in FIG. 12) filled in the dummy groove 699. For example, the adhesive 799a may increase the mechanical stability of the optical member 600 by bonding the first reflective member 601 and the second reflective member 602. In this way, the dummy groove 699 and/or the adhesive 799a may be provided in any portion of the boundary (e.g., the boundary between the first reflective member 601 and the second reflective member 602) that is visible from the exterior of the optical member 600. In an embodiment, a surface inclined with respect to the side surface(s) 621a, 621b, 621c, and 621d of the protrusion 621 and a surface inclined with respect to one surface of the first reflective member 601 may be combined with each other to implement the dummy groove 699.

According to an embodiment, the protrusion 621 and the receiving groove 611 may substantially allow the first reflective member 601 to move relative to the second reflective member 602 along the first extension direction C1, but may constrain the second reflective member 602 in the second extension direction C2. In describing embodiment(s) of the disclosure, the phrase 'allows movement along the first extension direction C1' may refer to an assembly process, and it should be noted that the first reflective member 601 and the second reflective member 602 may be constrained to each other in the first extension direction C1 inside the camera module (e.g., the camera module 500 of FIG. 6 or 7). In describing embodiment(s) of the disclosure, the phrase 'constrained to each other in the second extension direction C2' may refer to a state in which the first reflective member 601 and the second reflective member 602 are substantially fixed relative to each other in the second extension direction C2.

According to an embodiment, the second reflective member 602 may include the second reflective surface RS2 and/or the second transmissive surface TS2 that reflect light traveling inside it or emit it to the outside. The second transmissive surface TS2 is disposed inclined with respect to the second optical surface OS2, and may refer to a surface that transmits light to be provided to the image sensor 411. In a structure where the external light OL is incident on the second reflective member 602 via the first reflective member 601, the second optical surface OS2 may be understood as an incident surface of the second reflective member 602. The second reflective surface RS2 may be understood as, for example, a surface inclined with respect to the second optical surface OS2 and/or the second transmissive surface TS2, and may reflect at least a portion of the light traveling inside the optical member 600 (e.g., the second reflective member 602). In an embodiment, the optical member 600 (e.g., the second reflective member 602) may include a reflective coating or a mirror disposed on the second reflective surface RS2.

According to an embodiment, in the side view of FIG. 8, the second optical surface OS2, the second transmissive surface TS2, and/or the second reflective surface RS2 may be disposed in a substantially triangular shape. For example, one of the second optical surface OS2, the second transmissive surface TS2, and/or the second reflective surface RS2 may be understood as connecting edges of the other two surfaces. However, it should be noted that in the illustrated embodiment, the second reflective member 602 is shown as a polygonal shape other than a triangle, because a portion that does not affect the path of the external light OL to the image sensor 411 has been removed partially. In the embodiments to be described later, the second transmissive surface TS2 and/or the second reflective surface RS2 may be referred to as a 'second surface'.

According to an embodiment, the second reflective member 602 may include second side surface(s) SS2 that provides at least a portion of the outer surface, along with the second optical surface OS, the second transmissive surface TS2, and/or the second reflective surface RS2. The second side surface(s) SS2 may be disposed, for example, substantially parallel to light traveling inside the optical member 600. Depending on the design of the optical member 600, the second side surface(s) SS2 may be disposed inclined with respect to the light traveling inside the optical member 600. In an embodiment, even in a structure where the second side surface(s) SS2 are disposed inclined with respect to the light travel path inside the optical member 600, light may not intersect the second side surface(s) SS2 inside the optical member 600.

Although not shown, at least a portion of an area where light does not pass through, an area that does not reflect or refract light, and/or an area that does not intersect with light may be provided with a substance that does not transmit light (hereinafter, 'light blocking material'). For example, in an area of the second transmissive surface TS2 other than an area where light to be guided to the image sensor 411 passes, a light blocking layer such as a light-reflecting coating or a light-absorbing coating may be provided. The light blocking material may be provided on at least some of the side surfaces 621a, 621b, 621c, and 621d of the protrusion. In an embodiment, the light blocking layer may be formed by printing, painting, coating, or deposition plating, and implemented in the form of a light blocking film or a light blocking sheet. In an embodiment, a light blocking member may be provided in an area of the second reflective surface RS2 or the second optical surface OS2 other than the area where light to be guided to the image sensor 411 passes.

According to an embodiment, when the first reflective member 601 and the second reflective member 602 are coupled to each other, they may be constrained from moving relative to each other along the second extension direction C2. For example, the receiving groove 611 may be configured to allow the protrusion 621 to move in the first extension direction C1 in a plane parallel to the first optical surface OS2 or the second optical surface OS2, but restrict movement in a direction that crosses the first extension direction C1. In an embodiment, the first reflective member 601 and the second reflective member 602 may be constrained from moving relative to each other along the first extension direction C1 within the camera module 500. In an embodiment, the first reflective member 601 and the second reflective member 602 may be constrained from moving relative to each other along the first extension direction C1 and/or the second extension direction C2 by being bonded to each other by an adhesive (e.g., the adhesive 799a in FIG. 12) in a state where the protrusion 621 enters the receiving groove 611 along the first extension direction C1 and is aligned at a designated position.

According to an embodiment, even if a relative displacement occurs between the first reflective member 601 and the second reflective member 602 in the first extension direction C1, the optical member 600 may provide optical performance that conforms to design specifications. For example, in a state where the optical member 600 is disposed inside the camera module 500, the relative displacement between the first reflective member 601 and the second reflective member 602 in the first extension direction C1 may not affect the optical performance of the optical member 600. Herein, the phrase 'relative displacement does not affect optical performance' may refer to, for example, the fact that even if a relative displacement occurs between the first reflective member 601 and the second reflective member 602 in the first extension direction C1, the travel path of light guided to the image sensor 411 through the optical member 600 is not changed or distorted.

According to an embodiment, the receiving groove 611 and/or the protrusion 621 may maintain relative distances between the first surfaces TS1 and RS1 and the second surfaces TS2 and RS2 within a designated range by restricting the relative displacement between the first reflective member 601 and the second reflective member 602 in the second extension direction C2. For example, in coupling the first reflective member 601 and the second reflective member 602, a first distance G1 between the first transmissive surface TS1 and the second transmissive surface TS2 and/or a second distance G2 between the first reflective surface RS1 and the second reflective surface RS2 may substantially satisfy the design specifications. When the first optical surface OS1 and the second optical surface OS2 are coupled to face each other without the receiving groove 611 or the protrusion 621, the positions of the first reflective member 601 and the second reflective member 602 in the second extension direction C2 may not conform to the design specifications. In this case, the path of the second reflected light RL2 may be distorted and deviate from the design specifications. Embodiment(s) of the disclosure provide an alignment structure using the receiving groove 611 and the protrusion 621, thereby making it possible to couple the first reflective member 601 and the second reflective member 602 and implement an optical path that conforms to the design specifications.

According to an embodiment, as the external light OL is reflected or refracted at least once in the path in which the external light OL reaches the image sensor 411 via the optical member 600, stray light or flare may increase. The optical member 600 according to embodiment(s) of the disclosure may facilitate the arrangement of a light blocking structure by coupling the plurality of reflective members 601 and 602. In an embodiment, the light blocking structure may substantially block light incident on the optical member 600 from an unintended direction or light traveling inside the optical member 600 in an undesigned path, thereby suppressing stray light or flare.

According to an embodiment, the first transmissive surface TS1, which is one of the first surfaces TS1 and RS1, may be disposed to at least partially orient in an opposite direction to the second transmissive surface TS2, which is one of the second surfaces TS2 and RS2, with the optical surfaces OS1 and OS2 in between. In an embodiment, the first reflective surface RS 1, which is one of the first surfaces TS1 and RS1, may be disposed to at least partially orient in an opposite direction to the second reflective surface RS2, which is one of the second surfaces TS2 and RS2, with the optical surfaces OS1 and OS2 in between. Herein, the phrase "at least partially orient in an opposite direction" may refer to the fact that orientation direction vector components of the first surfaces TS1 and RS1 and the second surfaces TS2 and RS2 at least partially face in opposite directions based on the same coordinate system or with respect to the first optical surface OS1 or the second optical surface OS2. Taking the first transmissive surface TS1 and the second transmissive surface TS2 as an example, horizontal direction vector components may orient in opposite directions with respect to the first optical surface OS1, and vertical direction vector components may orient in opposite directions. In an embodiment, taking as an example the case where the first reflective surface RS1 and the second reflective surface RS2 are aligned perpendicular to the first optical surface OS1, the orientation directions of the first reflective surface RS1 and the second reflective surface RS2 may be understood as having only vector components in a direction parallel to the first optical surface OS1 and the first reflective surface RS1 and the second reflective surface RS2 orienting in opposite directions. Herein, the phrase 'the first reflective surface RS1 and the second reflective surface RS2 are aligned perpendicular to the first optical surface OS1' is mentioned as an example to describe the orientation directions of the reflective surfaces RS1 and RS2, and it should be noted that embodiment(s) of the disclosure are not limited thereto.

In an embodiment, the external light OL may be incident into the optical member 600 through one of the first transmissive surface TS1 and the second transmissive surface TS2, and the other of the first transmissive surface TS1 and the second transmissive surface TS2 may be disposed to substantially face the image sensor 411. In the illustrated embodiment, the external light OL may be incident on the optical member 600 through the first transmissive surface TS1, and the light DL that has passed through the second transmissive surface TS2 may be guided to the image sensor 411. As described with reference to FIG. 6 or 7, in the camera module 500, light focused or guided by the at least one lens 421 may be guided to the image sensor 411 via the optical member 600 (e.g., the optical member R of FIG. 6 or 7). In an embodiment not shown, a camera module may be implemented in which the lens(es) 421 of FIGS. 6 and 7 are omitted, or additional lens(es) disposed between the optical member 600 and the image sensor 411 are further included. In an embodiment, the lens(es) 421 of FIGS. 6 and 7 may focus light guided through an additional prism not shown and provide it to the optical member 600. For example, in the camera module 500 including the optical member R or 600 described above, additional prism(s) and/or lens(es) may be provided, and it should be noted that the camera module 500 of the illustrated embodiment does not limit the disclosure.

According to an embodiment, the external light OL may be incident on the optical member 600 (e.g., the first reflective member 601) by passing through the first transmissive surface TS1. The light incident into the first reflective member 601 may be reflected at least once and then output from the first reflective member 601 through the first optical surface OS1. For example, the external light OL may be reflected by at least the first reflective surface RS1 inside the first optical member 601 and travel in a direction toward the first transmissive surface TS1 (e.g., first reflected light RL1). In an embodiment, the first reflected light RL1 may be reflected again by the first transmissive surface TS1 inside the first reflective member 601, and then sequentially pass through the first optical surface OS1 and the second optical surface OS2 to be incident on the second reflective member 602 (e.g., the second reflected light RL2). In an embodiment, the first reflective member 601 may be configured to emit light incident on the first transmissive surface TS1 along a direction perpendicular to the first transmissive surface TS1 in a direction perpendicular to the first optical surface OS1 and/or the second optical surface OS2. For example, when the external light OL is incident perpendicularly on the first transmissive surface TS1, the second reflected light RL2 may substantially pass perpendicularly through the first optical surface OS1 and/or the second optical surface OS2. This configuration of the optical member 600 may suppress the reflection, refraction, and/or scattering of light on a boundary surface (e.g., the transmissive surface(s) TS1 and TS2 and/or the optical surface(s) OS1 and OS2) between media with different visible light refractive indexes. For example, the camera module 600 may suppress the increase of stray light or flare, even while including the optical member 600 as described above.

According to an embodiment, the second reflected light RL2 may be incident on the second reflective member 602 through the second optical surface OS2, be reflected at least once, and then be output from the second reflective member 602 toward the image sensor 411. In an embodiment, the second reflected light RL2 may be reflected once by the second transmissive surface TS2 inside the second reflective member 602 and then travel toward the second reflective surface RS2 (e.g., third reflected light RL3). The third reflected light RL3 may, for example, be reflected by the second reflective surface RS2 inside the second reflective member 602 and then pass through the second transmissive surface TS2 to be provided to the image sensor 411 (e.g., fourth reflected light or detected light DL). In an embodiment, a reflective layer or reflective coating with a high reflectance may be provided on the first reflective surface RS1 or the second reflective surface RS2, and the first reflected light RL1 (or the second reflected light RL2) may be incident on the first transmissive surface TS1 (or the second transmissive surface TS2) at an angle that satisfies a total internal reflection condition inside the optical member 600.

FIG. 11 is a perspective view illustrating a second reflective member 602a (e.g., the second reflective member 602 of FIG. 10) of an optical member (e.g., the optical members R and 600 of FIGS. 6 to 8) in a camera module (e.g., the camera module 500 of FIG. 6 or 7) according to an embodiment of the disclosure.

FIG. 11 illustrates, for example, a configuration in which an aforementioned light blocking structure 629 is provided, and the light blocking structure 629 may be implemented by a printed layer, a coating layer, a deposited layer, a plated layer, a light blocking film, and/or a light blocking sheet. The light blocking structure 629 may be provided, for example, on at least a portion of an edge of the first optical surface OS1 and/or the second optical surface OS2. For example, the aforementioned first optical surface OS1 and/or second optical surface OS2 is an area where light to be guided to the image sensor 411 passes through, and when an area that provides an optical path on the first reflective member 601 or the second reflective member 602 or 602a is determined, the light blocking structure 629 may be provided in the remaining area. In an embodiment, the guide walls 611a that surround at least a portion of the receiving groove 611 may be provided in an area that is substantially not the area that provides the optical path. For example, light to be guided to the image sensor 411 may pass through a portion of the bottom surface of the receiving groove 611 or a portion of the top surface of the protrusion 621. As mentioned earlier, this light blocking structure 629 may be further provided on the first side surface(s) SS1, the second side surface(s) SS2, and/or the side surfaces 621a, 621b, 621c, and 621d of the protrusion 621. In an embodiment, an additional light blocking structure may be provided on at least a portion of the edges of the transmissive surfaces TS1 and TS2 and/or the edges of the reflective surfaces RS1 and RS2.

According to an embodiment, when the light blocking structure 629 is implemented as a layer, film, and/or sheet with a designated thickness, a gap corresponding to the thickness of the light blocking structure 629 may be formed between the first optical surface OS1 and the second optical surface OS2. In an embodiment, a portion of an edge of the first optical surface OS1 and/or the second optical surface OS2 may include a recess corresponding to the thickness of the light blocking structure 629. For example, when the light blocking structure 629 is disposed in a recess of the second optical surface OS2, a surface of the light blocking structure 629 may be disposed to form a continuous plane or continuous curved surface with the second optical surface OS2. In this case, the first optical surface OS1 and the second optical surface OS2 may be disposed to be in substantial contact.

FIG. 12 is a diagram illustrating an optical member 700 (e.g., the optical members R and 600 of FIGS. 6 to 8) of a camera module (e.g., the camera module 500 of FIG. 6 or 7) according to an embodiment of the disclosure.

Referring to FIG. 12, the optical member 700 may include a first guide wall 711b provided on a first reflective member 701 and a second guide wall 721b provided on a second reflective member 702. The first guide wall 711b may be extended, for example, along the first extension direction C1, and disposed to face one side surface of the second reflective member 702 in the second extension direction C2. In an embodiment, the second guide wall 721b may be extended along the first extension direction C1 and disposed to face one side surface of the first reflective member 701 in the second extension direction C2. In an embodiment, the second guide wall 721b may be aligned in a direction facing the first guide wall 711b in the second extension direction C2. For example, the first guide wall 701b and the second guide wall 721b may restrict the first reflective member 701 from moving in a positive direction of the second extension direction C2 with respect to the second reflective member 702, and/or restrict the second reflective member 702 from moving in a negative direction of the second extension direction C2 with respect to the first reflective member 701.

According to an embodiment, when the first reflective member 701 and the second reflective member 702 are coupled to each other with the optical surfaces OS1 and OS2 facing each other, the first guide wall 711b may be in close contact with one side surface of the second reflective member 702, and the second guide wall 721b may be in close contact with one side surface of the first reflective member 701. When viewed from the exterior of the optical member 701, a dummy groove 799 (e.g., the dummy groove 699 of FIG. 8) may be formed on a boundary between the first reflective member 701 and the second reflective member 702 by a combination of inclined surfaces 713 and 723 (or curved surfaces), and the adhesive 799a may be filled in at least a portion of the dummy groove 799. The first inclined surface 713 (or curved surface) of the first reflective member 701 may be disposed in an inclined or curved shape with respect to another surface of the first reflective member 701, and the second inclined surface 723 of the second reflective member 702 may be disposed inclined with respect to another portion (e.g., the second transmissive surface TS2) of the surface of the second reflective member 702. For example, when the first reflective member 701 and the second reflective member 702 are coupled, the first inclined surface 713 and the second inclined surface 723 are disposed adjacent to each other, and the dummy groove 799 may be implemented by a relative inclination angle between the first inclined surface 713 and the second inclined surface 723. In an embodiment, the inclined surfaces 713 and 723 may be understood as being disposed inclined with respect to the surfaces of the reflective members 701 and 702, which provide the optical surfaces OS1 and OS2.

According to an embodiment, the optical member 700 (or the camera module 500 of FIG. 6) may further include the adhesive 799a filled in at least a portion of the dummy groove 799. The adhesive 799a filled in the dummy groove 799 may, for example, restrict the first reflective member 701 from moving in the negative direction of the second extension direction C2 with respect to the second reflective member 702, and/or restrict the second reflective member 702 from moving in the positive direction of the second extension direction C2 with respect to the first reflective member 701. In an embodiment, the dummy groove 799 may be further provided on the boundary between a first side surface (e.g., the first side surface SS1 of FIG. 9) of the first reflective member 701 and a second side surface (e.g., the second side surface SS2 of FIG. 10) of the second reflective member 702. For example, an adhesive structure may be provided on at least a portion of the boundary between the first reflective member 701 and the second reflective member 702 on the outer surface of the optical member 700.

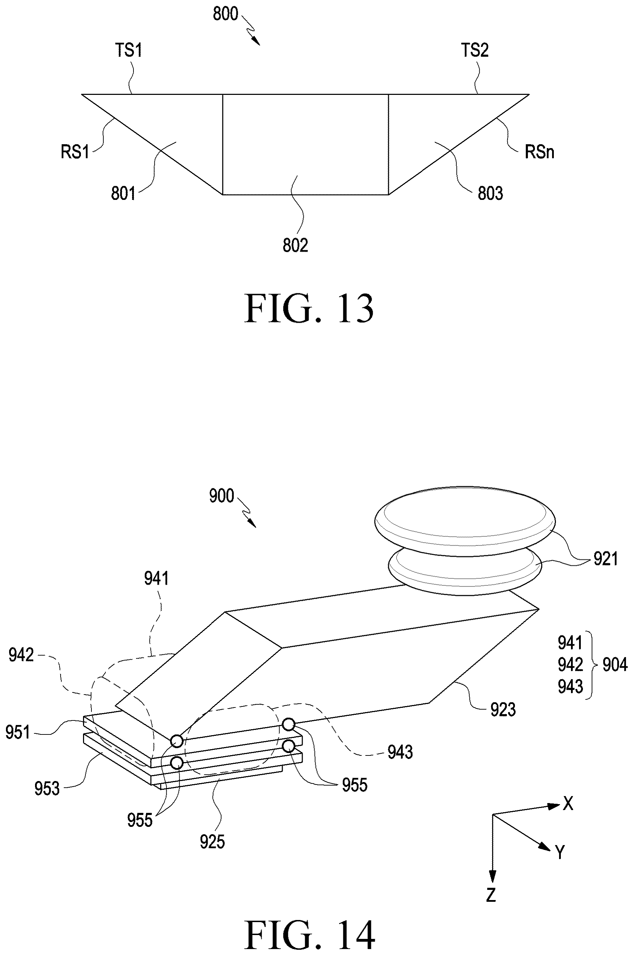

FIG. 13 is a diagram illustrating an optical member 800 (e.g., the optical members R and 600 of FIGS. 6 to 8) of a camera module (e.g., the camera module 500 of FIG. 6 or 7) according to an embodiment of the disclosure.

In the above-described embodiment, the optical members 600 and 700 are exemplified as being implemented by combining two reflective members 601 and 602, and 701 and 702. However, the embodiments of the disclosure are not limited to the foregoing embodiment, and as illustrated in FIG. 13, three or more reflective members 801, 802, and 803 may be combined to implement the single optical member 800. Between two reflective members that are coupled to face each other among the three or more reflective members 801, 802, and 803, the aforementioned structure of the receiving groove (e.g., the receiving groove 611 of FIG. 9) (and/or the protrusion (e.g., the protrusion 621 of FIG. 10), the light blocking structure (e.g., the light blocking structure 629 of FIG. 11), and/or the adhesive structure (e.g., the adhesive 799a of FIG. 12) may be provided, and a detailed description thereof will be omitted.

As illustrated in FIG. 13, and as in the embodiment described above, the reflective members 801, 802, and 803 may have a polygonal prism shape in the optical member 800 including the plurality of reflective members 801, 802, and 803. In an embodiment, a polygonal prism-shaped optical member 800 such as a triangular prism shape or a quadrilateral (e.g., rectangle, square, parallelogram, and/or trapezoid) prism shape may be implemented by combining the reflective members 801, 802, and 803 having various shapes. For example, it should be noted that in embodiment(s) of the disclosure, the shapes of the reflective members 801, 802, and 803 and/or the optical members 600, 700, and 800 are not limited to the embodiment described above.

According to an embodiment, the optical member 800 may include the first transmissive surface TS1 on which external light is incident and the second transmissive surface TS2 disposed to face an image sensor (e.g., the image sensor 411 of FIG. 6 or 7). When the optical member 800 has a trapezoidal prism shape, the first transmissive surface TS1 and the second transmissive surface TS2 may be understood as being disposed in a single plane. In an embodiment, when the optical member 800 has a parallelogram prism shape or a trapezoidal prism shape, the number of times light is reflected in an optical path from the first transmissive surface TS1 to the second transmissive surface TS2 may be set in various ways. For example, depending on relative arrangement angles between the transmissive surface(s) TS1 and TS2 and the reflective surface(s) RS1 and RSn, light incident on the trapezoidal prism-shaped optical member 800 through the first transmissive surface TS1 may be reflected at least twice inside the optical member 800 and then provided to the image sensor 411 through the second transmissive surface TS2. In an embodiment, light incident on the optical member 800 perpendicularly on the first transmissive surface TS1 may travel perpendicularly to optical surfaces (e.g., the optical surfaces OS1 and OS2 of FIGS. 8 to 10) between the first reflective member 801 and the second reflective member 802 and/or between the second reflective member 802 and the third reflective member 803.

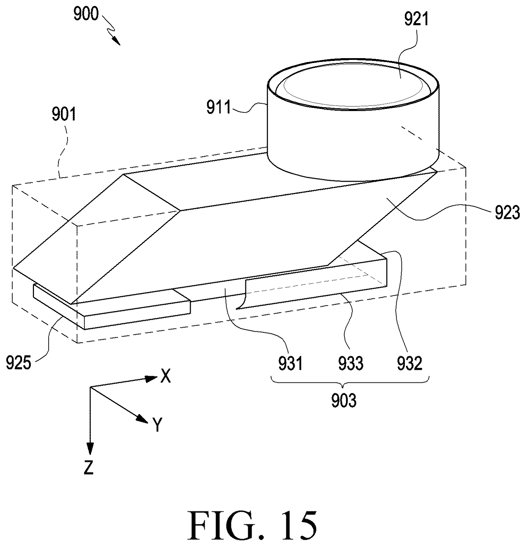

FIG. 14 is a first perspective view illustrating a camera module 900 (e.g., the camera module 500 of FIG. 6 or 7) according to an embodiment of the disclosure. FIG. 15 is a second perspective view illustrating the camera module 900 according to an embodiment of the disclosure.

For the sake of brevity of the drawings, some components of FIG. 15 are omitted in FIG. 14, and some components of FIG. 14 are omitted in FIG. 15.

Referring to FIGS. 14 and 15, the camera module 900 may include lens(es) 921 (e.g., the lens assembly 421 of FIG. 6 or 7), an optical member 923 (e.g., the optical members R and 600 of FIGS. 6 to 8), and/or an image sensor 925 (e.g., the image sensor 411 of FIG. 6 or 7). In an embodiment, the optical member 923 and/or the image sensor 925 are substantially accommodated inside a casing 901, and the lens(es) 921 may be accommodated in a lens barrel structure 911 provided on one side of the casing 901. The optical member 923 may, for example, reflect light focused or guided by the lens(es) 921 at least once and guide it to the image sensor 925.

A Cartesian coordinate system of the illustrated embodiment refers to, for example, the Cartesian coordinate system of FIGS. 2 to 6, but it should be noted that the embodiment of the disclosure is not limited thereto. For example, the arrangement of the camera module 900 in an electronic device that is actually manufactured may be different from the illustrated embodiment. In an embodiment, an alignment direction of the lens(es) 921 or a direction in which external light is incident on the optical member 923 may be understood as being substantially parallel to the Z axis. In an embodiment, a direction in which light is output from the optical member 923 and/or a direction in which light is incident on the image sensor 925 may be understood as being substantially parallel to the Z axis. As in the illustrated embodiment, when the optical member 923 is a parallelogram, light may be incident on the image sensor 923 along the +Z direction. Unlike the illustrated embodiment, when the optical member 923 has a trapezoidal shape, the image sensor 925 may be disposed at a different position and the light incident on the image sensor 925 may travel along the -Z direction.

According to an embodiment, in implementing the optical member 923, the first extension direction C1 of FIGS. 8 to 10 may be substantially parallel to the X-axis direction of FIG. 14. In an embodiment, in implementing the optical member 923, the aforementioned second extension direction C2 of FIGS. 8 to 10 may be a direction inclined with respect to an XY plane of FIG. 14. Light incident perpendicularly on a surface of the optical member 923 (e.g., the first transmissive surface TS1 of FIG. 8) out of light focused by the lens(es) 921 may travel perpendicularly to an optical surface (e.g., the optical surface(s) OS1 and OS2 of FIG. 8) inside the optical member 923.

According to an embodiment, the camera module 900 may further include a first carrier 951 that provides an autofocus function and a second carrier 953 that provides an anti-shake function, and the image sensor 925 may move with respect to the optical member 923 according to operations of the first carrier 951 and the second carrier 953. In an embodiment, the first carrier 951 may be disposed to be reciprocally movable in a direction getting closer to or farther away from the optical member 923 inside the casing 901. For example, the first carrier 951 may implement the focus adjustment function by linearly reciprocating the image sensor 925 along the Z-axis direction. In an embodiment, a guide structure of a plurality of guide balls 955 may be implemented between the first carrier 951 and an inner wall of the casing 901. For example, when the first carrier 951 linearly reciprocates inside the casing 901, the plurality of guide balls 955 may guide the linear reciprocation of the first carrier 951, while reducing a friction area.

According to an embodiment, the second carrier 953 may be disposed on the first carrier 951 and linearly reciprocate in the Z-axis direction together with the first carrier 951. In an embodiment, the second carrier 953 may be disposed to be horizontally movable on the first carrier 951. For example, the second carrier 953 may reciprocate in at least two directions with respect to the first carrier 951 in a plane that intersects the Z axis. In an embodiment, the second carrier 953 may be understood as moving horizontally in two mutually perpendicular directions in a plane perpendicular to the Z-axis direction (e.g., a plane parallel to the XY plane). The horizontal movement of the second carrier 953 is based on vibration applied to the camera module 900 when a capturing function is executed, and may be understood as, for example, performing an optical anti-shake function. In an embodiment, second guide ball(s) not shown may be provided between the first carrier 951 and the second carrier 953 to guide the horizontal movement of the second carrier 953 with respect to the first carrier 951, while reducing the friction area during the horizontal movement.

According to an embodiment, as the image sensor 925 is disposed on the second carrier 953, a focus adjustment operation may be implemented according to the movement of the first carrier 951, and an anti-shake operation may be implemented according to the horizontal movement of the second carrier 953 with respect to the first carrier 951. In an embodiment, the second carrier 953 may be disposed to be horizontally movable inside the casing 901, and the first carrier 951 may be disposed to be linearly reciprocable in the Z-axis direction on the second carrier 953. In this case, the image sensor 925 may be disposed on the first carrier 951.

According to an embodiment, the camera module 900 may further include driving members 904 (941, 942, and 943) that provide a driving force for the focus adjustment function and/or the anti-shake function. The driving members 904 may be implemented by a voice coil motor including a coil and a magnet, and generate the driving force for the focus adjustment function and/or the anti-shake function based on an electrical signal applied to the coil. In an embodiment, among the driving members 904, a first driving member 941 may be disposed in an area facing the optical member 923 and/or the carriers 951 and 953 in the Y-axis direction, a second driving member 942 may be disposed in an area facing the optical member 923 and/or the carriers 951 and 953 in the X-axis direction, and/or a third driving member 943 may be disposed in an area facing the optical member 923 and/or the carriers 951 and 953 in the Y-axis direction. In an embodiment, when the first driving member 941 is defined as being disposed in the -Y direction with respect to the optical member 923, the third driving member 943 may be understood as being disposed in the +Y direction with respect to the optical member 923. For example, the first driving member 941 and the third driving member 943 may be disposed to at least partially face each other with the optical member 923 in between.

According to an embodiment, when one of the first driving member 941 and the third driving member 943 provides a driving force to move the first carrier 951 in the Z-axis direction, the other of the first driving member 941 and the third driving member 943 may provide a driving force to move the second carrier 953 in the Y-axis direction (or X-axis direction). In this case, the second driving member 942 may provide a driving force to move the second carrier 953 in the X-axis direction (or Y-axis direction). However, embodiment(s) of the disclosure are not limited to the direction of the driving force generated by the driving members 904 as mentioned above, and depending on the winding direction of wires that implement the coils in the driving members 904 or the relative arrangement of the coil and the magnet within one driving member 904, the position and the direction of the driving force may be implemented differently from the illustrated embodiment.

According to an embodiment, the camera module 900 may further include a flexible printed circuit board 903 extending from the image sensor 925. The flexible printed circuit board 903 may, for example, provide wiring for supplying power to the image sensor 925 or for transmitting data obtained from the image sensor 925 to a processor (e.g., the processor 120 of FIG. 1). In an embodiment, the flexible printed circuit board 903 may include a first extension portion 931 with one end connected to the image sensor 925, a second extension portion 932 extending from the other end of the first extension portion 931, and a third extension portion 933 extending from one end of the second extension portion 932. In an embodiment, the first extension portion 931 may be at least partially disposed in the same plane as the image sensor 925.

According to an embodiment, the second extension portion 932 may be understood as being disposed inclined or perpendicular to the first extension portion 931. In an embodiment, the third extension portion 933 may be understood as being disposed inclined or perpendicular to the first extension portion 931, and disposed inclined or perpendicular to the second extension portion 932. For example, the first extension portion 931 may be substantially parallel to the XY plane and extend along the X-axis direction, the second extension portion 932 may be substantially parallel to the YZ plane and extend along the Y-axis direction, and/or the third extension portion 933 may be substantially parallel to the XZ plane and extend along the X-axis direction. In an embodiment, the first extension portion 931 may be disposed to at least partially face one of the transmissive surfaces (e.g., the transmissive surfaces TS1 and TS2 of FIG. 8) of the optical member 923, the second extension portion 932 may be disposed to at least partially face one of the reflective surfaces (e.g., the reflective surfaces RS1 and RS2 of FIG. 8) of the optical member 923, and/or the third extension portion 933 may be disposed to at least partially face a side surface (e.g., the first side surface(s) SS1 of FIG. 9 and/or the second side surface(s) SS2 of FIG. 10) of the optical member 900.

According to an embodiment, the arrangement of the flexible printed circuit board 903 as described above may facilitate the movement of the image sensor 925 with respect to the optical member 923. Herein, the phrase 'movement of the image sensor' may refer to, for example, reciprocating movement in the Z-axis direction for autofocus adjustment, or horizontal movement for anti-shake. In an embodiment, during an autofocus operation, the second extension portion 932 and the third extension portion 933 may obstruct the movement of the image sensor 925. However, the first extension portion 931 may be deformed between a flat shape and a curved shape, allowing the image sensor 925 to reciprocate in the Z-axis direction. Similarly, during an anti-shake operation, the first extension portion 931 may obstruct the horizontal movement of the image sensor 925. However, the second extension portion 932 (or the third extension portion 933) may be deformed between a flat shape and a curved shape, allowing the image sensor 925 to reciprocate in the X-axis direction (or Y-axis direction). As such, the structure where the flexible printed circuit board 903 is disposed around three surfaces of the optical member 925 may facilitate the movement of the image sensor 925 during the autofocus or anti-shake operation. In an embodiment, the autofocus or anti-shake function may be implemented by moving the lens(es) 921, in which case the movement of the image sensor 925 may not be necessary, and thus the arrangement of the flexible printed circuit board 903 may be implemented differently from the illustrated embodiment.

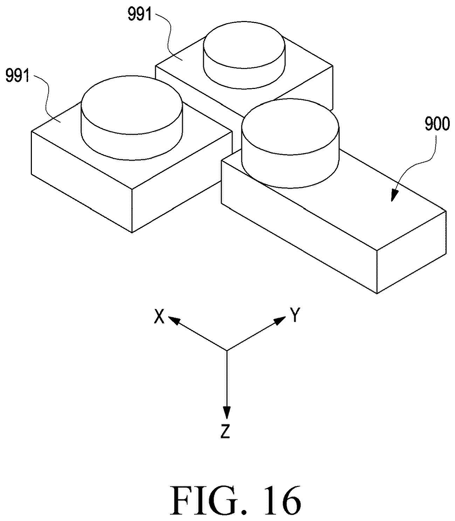

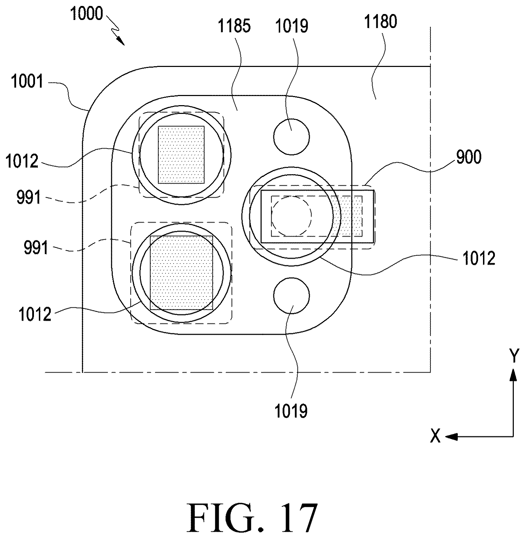

FIG. 16 is a diagram illustrating the arrangement of camera module(s) 991 and 900 (e.g., the camera modules 205, 212, 213, 500, or 900 of FIGS. 3, 6, 7, 14, and/or 15) in an electronic device (e.g., the electronic devices 101, 200, 300, and 400 of FIGS. 1 to 6) according to an embodiment of the disclosure. FIG. 17 is a diagram illustrating an electronic device 1000 (e.g., the electronic devices 101, 200, 300, and 400 of FIGS. 1 to 6) that includes the camera modules 991 and 900 according to an embodiment of the disclosure.

As mentioned earlier, a high-quality captured image may be obtained using a miniaturized electronic device by mounting a plurality of camera modules with different optical characteristics (e.g., field of views). FIGS. 16 and 17 may illustrate an arrangement when the plurality of camera modules 991 and 900 are mounted in the single electronic device 1000. In describing the embodiment of FIG. 16 or FIG. 17, a second camera module 900 is substantially an example of the aforementioned camera module (e.g., the camera module 205, 212, 213, 500, or 900 of FIGS. 3, 6, 7, 14, and/or 15), and the same reference numerals as those for the camera modules of FIGS. 14 and 15 may be assigned in the drawings.

Referring to FIGS. 16 and 17, the electronic device 1000 may include at least one first camera module 991, provided as a standard, wide-angle, and/or ultra-wide-angle camera, and the second camera module 900 disposed adjacent to the first camera module(s) 991. The second camera module 900 may provide higher performance than the first camera module(s) 991 for a telephoto function. For example, the second camera module 900 may be understood as having a smaller field of view (FOV) or a longer focal length than the first camera module 991. In an embodiment, the second camera module 900 may be one of the camera modules that include the optical member described above (e.g., the optical member R, 600, or 923 of FIGS. 6 to 8, 14, and/or 15). In an embodiment, the electronic device 1000 (e.g., the processor 120 of FIG. 1) may obtain an object image using at least one of the first camera module(s) 991 and the second camera module 900, and generate an even higher-quality image by synthesizing images obtained from the first camera module(s) 991 and the second camera module 900.

According to an embodiment, the electronic device 1000 may include a rear plate 1180, a cover plate 1185, and/or opening areas 1012 provided in the cover plate 1185. This embodiment of the electronic device 1000 may be similar to the embodiments of FIGS. 2 to 6, and thus a detailed description thereof will be omitted. The first camera module(s) 991 and/or the second camera module 900 may be disposed to correspond to any one of the opening areas 1012. In an embodiment, the first camera module(s) 991 may be disposed in two of the opening areas 1012, which are arranged in the leftmost column of FIG. 17, and the second camera module 900 may be disposed in the rightmost opening area 1012 of FIG. 17. In disposing the second camera module 900, it may be understood that the lens(es) 921 of FIG. 14 or FIG. 15 are disposed in alignment with any one of the opening areas 1012, and the optical member 923 (or the image sensor 925) of FIG. 14 or FIG. 15 is disposed to the right of the lens(es) 921. In an embodiment, it may be understood that the second camera module 900 having a relatively large length is disposed further on the inner side than the first camera module(s) 991 by including the optical member 923, and as the first camera module(s) 991 are disposed adjacent to one side surface (e.g., the side 210C of FIG. 2) of a housing 1001, the first camera module(s) 991 are disposed in an area between an edge of the electronic device 1000 and the second camera module 900. In a structure where a plurality of first camera modules 991 are provided, it may be understood that the first camera modules 991 are arranged along the Y-axis direction.

This arrangement of the camera modules 991 and 900 may be useful for securing an area for an additional electronic component 1019 (e.g., a light source such as a flash, an IR sensor for distance or depth measurement, and/or a microphone for detecting sound in a shooting direction) in an area provided by the cover plate 1185. In an embodiment, when a plurality of first camera modules 991 are provided and arranged adjacent to the edge of the electronic device 1000, an area for the additional electronic component 1019 may be secured above or below the second camera module 900. For example, the additional electronic component 1019, such as a flash or an IR radar, may be disposed in an area above or below the second camera module 900.

According to an embodiment, when a relatively long optical member 923 compared to other camera modules (e.g., the first camera module(s) 991) is included, the second camera module 900 (and/or the optical member 923) may be disposed substantially parallel to the X-axis direction, thereby making it easier to secure a space for various electrical/electronic components or to secure the capacity of a battery (e.g., the battery 350 of FIG. 4) inside the electronic device 1000. For example, since the battery 350 is generally manufactured in a rectangular shape, when the optical member 923 is disposed substantially parallel to the Y axis, a space for disposing the rectangular-shaped battery 350 may be interfered with by the optical member 923. Therefore, the interference with the space for disposing the battery 350 may be suppressed or the capacity of the battery 350 may be easily increased, by disposing the optical member 923 substantially parallel to the X-axis direction. In an embodiment, when the optical member 923 is disposed substantially parallel to the X-axis direction and the capacity of the battery 350 is maintained, design freedom in arranging electrical/electronic components may be increased.

As described above, a camera module (e.g., the camera module 205, 212, 213, 500, or 900 of FIGS. 3, 6, 7, 14, and/or 15) and/or an electronic device (e.g., the electronic device 101, 200, 300, 400, or 1000 of FIGS. 1 to 6 and/or 17) according to an embodiment of the disclosure may be miniaturized and easily implement a telephoto function by including an optical member (e.g., the optical member R, 600, or 923 of FIGS. 6 to 8, 14, and/or 15) that reflects or refracts light guided to an image sensor (e.g., the image sensor 411 or 925 of FIGS. 6, 7, 14, and/or 15) at least once. For example, as the design freedom of an optical path is improved, the camera module may provide telephoto performance and be easily disposed even in a narrow space. According to an embodiment, as an optical member is implemented by coupling a plurality of reflective members (e.g., the reflective members 601 and 602 of FIG. 8), a light blocking structure (e.g., the light blocking structure 629 of FIG. 11) may be easily disposed. For example, the optical member may suppress stray light or flare in the camera module. In an embodiment, when the plurality of reflective members are coupled, their alignment position is determined using a coupling or guiding structure (e.g., the receiving groove 611 and the protrusion 621 of FIGS. 8 to 10), thereby providing performance that meets design specifications.

The effects obtainable from the disclosure are not limited to those mentioned above, and other unmentioned effects will be clearly understood by those skilled in the art from the description of the above-described embodiment(s).

As described above, according to an embodiment of the disclosure, a camera module (e.g., the camera module 205, 212, 213, 500, or 900 in FIG. 3, FIG. 6, FIG. 7, FIG. 14, and/or FIG. 15) may include a first reflective member (e.g., the first reflective member 601 in FIG. 8 or FIG. 9) including a receiving groove (e.g., the receiving groove 611 in FIG. 9) formed on one surface thereof and a first optical surface (e.g., the first optical surface OS1 in FIG. 8) provided within an area provided by the receiving groove, a second reflective member (e.g., the second reflective member 602 in FIG. 8 or FIG. 10) including a protrusion (e.g., the protrusion 621 in FIG. 8 or FIG. 10) protruding from one surface thereof and at least partially accommodated in the receiving groove, and a second optical surface (e.g., the second optical surface OS2 in FIG. 8) provided on one surface of the protrusion to be disposed to face the first optical surface, and an image sensor (e.g., the image sensor 411 or 925 in FIG. 6, FIG. 7, FIG. 14, and/or FIG. 15) configured to detect at least a portion of light guided via the first optical surface and the second optical surface. In an embodiment, the receiving groove may be configured to allow the protrusion to move in a first extension direction (e.g., the first extension direction C1 in FIG. 8) in a plane parallel to the first optical surface or the second optical surface, and to inhibit a movement of the protrusion in a second extension direction (e.g., the second extension direction C2 in FIG. 8) crossing the first extension direction.

According to an embodiment, the first reflective member may include a first surface (the first transmissive surface TS1 or the first reflective surface RS1 in FIG. 8) inclined with respect to the first optical surface, and the second reflective member may include a second surface (the second transmissive surface TS2 or the second reflective surface RS2 in FIG. 8) inclined with respect to the second optical surface. In an embodiment, the second surface may be disposed so as to be at least partially opposite to the first surface with the first optical surface or the second optical surface interposed therebetween. In an embodiment, the receiving groove and the protrusion may be configured to maintain a distance (e.g., the first distance G1 and/or the second distance G2 in FIG. 8) between the first surface and the second surface within a predetermined range.

According to an embodiment, the first surface or the second surface may be configured to transmit or reflect light guided to the image sensor.

According to an embodiment, the protrusion may include a plurality of side surfaces (e.g., the side surfaces 621a, 621b, 621c, and 621d in FIG. 10) extending vertically or obliquely from an edge of the second optical surface. In an embodiment, at least one of the plurality of side surfaces may be aligned in parallel with the first extension direction and disposed to face an inner wall of the receiving groove in a direction crossing the first extension direction.

According to an embodiment, at least another one of the plurality of side surfaces may be exposed to an outer space of the receiving groove while being disposed toward the first extension direction.

According to an embodiment, the at least another one of the plurality of side surfaces, which is exposed to the outer space of the receiving groove, may be disposed to form a continuous plane or a continuous curved surface with at least a portion of a surface of the first reflective member.

According to an embodiment, the camera module may further include a dummy groove (e.g., the dummy groove 699 or 799 in FIG. 8 or FIG. 12) provided on a boundary between the at least another one of the plurality of side surfaces, which is exposed to the outer space of the receiving groove, and at least the portion of the surface of the first reflective member, and an adhesive (e.g., the adhesive 799a in FIG. 12) filled in at least a portion of the dummy groove.

According to an embodiment, the camera module may be configured such that light incident vertically on one surface of the first reflective member or the second reflective member vertically passes through the first optical surface or the second optical surface.

According to an embodiment, the first reflective member may include a first transmissive surface (e.g., the first transmissive surface TS1 in FIG. 8) and a first reflective surface (e.g., the first reflective surface RS1) inclined with respect to the first transmissive surface. In an embodiment, the second reflective member may include a second transmissive surface (e.g., the second transmissive surface TS2 in FIG. 8) disposed to face a direction opposite to the first transmissive surface, and a second reflective surface (e.g., the second reflective surface RS2) disposed to face a direction opposite to the first reflective surface. In an embodiment, one of the first transmissive surface and the second transmissive surface may be disposed to face the image sensor.

According to an embodiment, the camera module may be configured such that light incident perpendicular to the other of the first transmissive surface and the second transmissive surface passes vertically through the first optical surface or the second optical surface.

According to an embodiment, the camera module may further include at least one lens (e.g., the lens assembly 421 in FIG. 6 or the lens(es) 921 in FIG. 14) configured to receive external light and guide the received light to the other of the first transmissive surface and the second transmission surface.

According to an embodiment, the camera module may further include a first inclined surface (e.g., the first inclined surface 713 in FIG. 12), which is a portion of a surface of the first reflective member, formed to be inclined with respect to the one surface of the first reflective member, and a second inclined surface (e.g., the second inclined surface 723 in FIG. 12), which is a portion of a surface of the second reflective member, formed to be inclined with respect to the one surface of the second reflective member. In an embodiment, when the protrusion is accommodated in the receiving groove, the first inclined surface and the second inclined surface may be configured to form a dummy groove (e.g., the dummy groove 699 or 799 in FIG. 8 or FIG. 12) by being disposed adjacent to each other.

According to an embodiment, the camera module may further include an adhesive (e.g., the adhesive 799a in FIG. 12) filled in at least a portion of the dummy groove.

According to an embodiment, the camera module may further include a light blocking member (e.g., the light blocking structure 629 in FIG. 11) provided on at least a portion of an edge of the first optical surface or at least a portion of an edge of the second optical surface.

According to an embodiment, the light blocking member may include at least one of a printing layer, a coating layer, a deposition layer, a plating layer, a light blocking film, or a light blocking sheet.

According to an embodiment, the camera module may further include a flexible printed circuit board (e.g., the flexible printed circuit board 903 in FIG. 15) extending from the image sensor. In an embodiment, the flexible printed circuit board may include a first extension portion (e.g., the first extension portion 931 in FIG. 15) disposed at least partially in the same plane as the image sensor, a second extension portion (e.g., the second extension portion 932 in FIG. 15) extending from the first extension portion and disposed inclined with respect to the first extension portion, and a third extension portion (e.g., the third extension portion 933 in FIG. 15) extending from the second extension and disposed inclined with respect to the first and second extension portions.

According to an embodiment, the first extension portion may be configured to allow the image sensor to reciprocate along a direction in which light is incident on the image sensor.

According to an embodiment, the second extension portion or the third extension portion may be configured to allow the image sensor to move horizontally in a plane that intersects the direction in which light is incident on the image sensor.

According to an embodiment of the disclosure, an electronic device (e.g., the electronic device 101, 200, 300, 400, or 1000 in FIGS. 1 to 6 and/or FIG. 17) may include at least one first camera module (e.g., the first camera module(s) 991 in FIG. 16 or FIG. 17), a second camera module (e.g., the camera modules 205, 212, 213, 500, and 900 in FIGS. 3, 6, and 7, and FIGS. 14 to 17) disposed adjacent to the at least one first camera module and having a smaller field of view (FOV) than the at least one first camera module, wherein the second camera module is configured according to any one of claims 1 to 18, and a processor (e.g., the processor 120 in FIG. 1) configured to obtain an object image using at least one of the at least one first camera module or the second camera module.

According to an embodiment, the at least one first camera module may be disposed in an area between one side of the electronic device and the second camera module, adjacent to one side surface of the electronic device.

While the disclosure has been illustrated and described with reference to an embodiment, it should be understood that the embodiment is for illustrative purposes and is not intended to limit the disclosure. It will be apparent to those skilled in the art that various changes in form and specific configurations may be made without departing from the scope of the disclosure, including the appended claims and their equivalents.

## Claims

1. A camera module (205, 212, 213; 500; 900) comprising:
a first reflective member (601; 701) including a receiving groove (611) formed on one surface thereof and a first optical surface (OS1) provided within an area provided by the receiving groove;
a second reflective member (602; 702) including a protrusion (621) protruding from one surface thereof and at least partially accommodated in the receiving groove, and a second optical surface (OS2) provided on one surface of the protrusion to be disposed to face the first optical surface; and
an image sensor (411; 925) configured to detect at least a portion of light guided via the first optical surface and the second optical surface,
wherein the receiving groove is configured to allow the protrusion to move in a first extension direction (C1) in a plane parallel to the first optical surface or the second optical surface, and to inhibit a movement of the protrusion in a second extension direction (C2) crossing the first extension direction.

2. The camera module of claim 1, wherein the first reflective member includes a first surface (TS1, RS1) inclined with respect to the first optical surface, and the second reflective member includes a second surface (TS2, RS2) inclined with respect to the second optical surface,
wherein the second surface is disposed so as to be at least partially opposite to the first surface with the first optical surface or the second optical surface interposed therebetween, and
wherein the receiving groove and the protrusion are configured to maintain a distance between the first surface and the second surface within a predetermined range.

3. The camera module of claim 2, wherein the first surface or the second surface is configured to transmit or reflect light guided to the image sensor.

4. The camera module of any one of claims 1 to 3, wherein the protrusion includes a plurality of side surfaces (621a, 621b, 621c, 621d) extending vertically or obliquely from an edge of the second optical surface, and
wherein at least one of the plurality of side surfaces is aligned in parallel with the first extension direction and is disposed to face an inner wall of the receiving groove in a direction crossing the first extension direction.

5. The camera module of claim 4, wherein at least another one of the plurality of side surfaces is exposed to an outer space of the receiving groove while being disposed toward the first extension direction.

6. The camera module of claim 5, wherein the at least another one of the plurality of side surfaces, which is exposed to the outer space of the receiving groove, is disposed to form a continuous plane or a continuous curved surface with at least a portion of a surface of the first reflective member.

7. The camera module of claim 6, further comprising:
a dummy groove (699, 799) provided on a boundary between the at least another one of the plurality of side surfaces, which is exposed to the outer space of the receiving groove, and at least the portion of the surface of the first reflective member; and
an adhesive filled in at least a portion of the dummy groove.

8. The camera module of any one of claims 1 to 7, wherein the camera module is configured such that light incident vertically on one surface of the first reflective member or the second reflective member vertically passes through the first optical surface or the second optical surface.

9. The camera module of any one of claims 1 to 8, wherein the first reflective member includes a first transmissive surface (TS1) and a first reflective surface (RS1) inclined with respect to the first transmissive surface,
wherein the second reflective member includes a second transmissive surface (TS2) disposed to face a direction opposite to the first transmissive surface, and a second reflective surface (RS2) disposed to face a direction opposite to the first reflective surface, and
wherein one of the first transmissive surface and the second transmissive surface is disposed to face the image sensor.

10. The camera module of claim 9, wherein the camera module is configured such that light incident perpendicular to the other of the first transmissive surface and the second transmissive surface passes vertically through the first optical surface or the second optical surface.

11. The camera module of claim 9 or 10, further comprising at least one lens (421a, 421b; 921) configured to receive external light and guide the received light to the other of the first transmissive surface and the second transmission surface.

12. The camera module of any one of claims 1 to 11, further comprising:
a first inclined surface (713), which is a portion of a surface of the first reflective member, formed to be inclined with respect to the one surface of the first reflective member; and
a second inclined surface (723), which is a portion of a surface of the second reflective member, formed to be inclined with respect to the one surface of the second reflective member,
wherein when the protrusion is accommodated in the receiving groove, the first inclined surface and the second inclined surface are configured to form a dummy groove (699; 799) by being disposed adjacent to each other.

13. The camera module of claim 12, further comprising an adhesive filled in at least a portion of the dummy groove.

14. The camera module of any one of claims 1 to 12, further comprising a light blocking member (629) provided on at least a portion of an edge of the first optical surface or at least a portion of an edge of the second optical surface.

15. An electronic device (101; 200; 300; 400; 1000) comprising:
at least one first camera module (991);
a second camera module (205; 212; 213; 500; 900) disposed adjacent to the at least one first camera module and having a smaller field of view (FOV) than the at least one first camera module, wherein the second camera module is configured according to any one of claims 1 to 14; and
a processor (120) configured to obtain an object image using at least one of the at least one first camera module or the second camera module.
